# EUROPEAN PATENT APPLICATION

(11) **EP 4 753 303 A1**
(43) Date of publication of application: **03.06.2026**
(21) Application number: 23946286.4
(22) Date of filing: 27.07.2023
(51) Int. Cl.: H04W 8/14

(54) **METHODS FOR ACTIVATING SCG, TERMINAL DEVICES, AND NETWORK DEVICES**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); FAN, Jiangsheng, Dongguan, Guangdong 523860 (CN)
(74) Representative: Grassi, Stefano
(86) International application number: PCT/CN2023/109691
(87) International publication number: WO 2025/020204

(57) **Abstract**

Provided are methods for activating a secondary cell group (SCG), terminal devices, and network devices. In one aspect, a method comprises: a terminal device performs beam failure detection and/or wireless link monitoring on an SCG in a deactivated state, starting of the radio link monitoring (RLM) and/or the beam failure detection (BFD) being determined on the basis of prediction information of data traffic of the terminal device. Thus, the terminal may start to perform the RLM and/or the BFD at a suitable moment, such that the terminal device may perform the RLM and/or the BFD nonpersistently during an SCG inactive state, thereby reducing energy consumption of the terminal performing the RLM and/or the BFD. In another aspect, a method comprises: a terminal device receives a first activation command, the first activation command being used for activating an SCG before actual data traffic of the terminal device reaches an SCG activation threshold. Thus, the terminal may start to perform operations related to the SCG activation before an SCG activation condition is satisfied, thereby reducing the SCG activation time.

## Description

### TECHNICAL FIELD

The present disclosure relates to the technical field of communication, and more particularly, to a method, a terminal device, and a network device for activating a secondary cell group (SCG).

### BACKGROUND

In the dual connectivity (DC) scenario, it will consume a lot of energy for a terminal device to maintain a connection between a master cell group (MCG) and an SCG at the same time. Therefore, some communication technologies introduce the deactivated state of the SCG. When the data traffic of the terminal device is not large, the SCG may be deactivated. When the data traffic of the terminal device increases again and the amount of data reaches an SCG activation threshold, an activation procedure of the SCG may be initiated.

It takes a period of time to activate the SCG, that is, there is a delay between satisfying the SCG activation condition and successful activation of the SCG. This delay may be referred to as an SCG activation time. How to reduce the activation time of SCG is an urgent technical problem to be solved.

### SUMMARY

The present disclosure provides a method, a terminal device, and a network device for activating an SCG. Various aspects of the present disclosure are described below.

In a first aspect, there is provided a method for activating an SCG, the method including: performing, by a terminal device, beam failure detection (BFD) and/or radio link monitoring (RLM) on the SCG in a deactivated state. Here, initiation of the BFD and/or the RLM is determined based on predicted information of data traffic of the terminal device.

In a second aspect, there is provided a method for activating an SCG, the method including: sending, by a network device, information to a terminal device. Here, the indication information is related to the terminal device performing BFD and/or RLM on the SCG in a deactivated state, and initiation of the BFD and/or RLM is determined based on the predicted information of data traffic of the terminal device.

In a third aspect, there is provided a method for activating an SCG, the method including: receiving, by a terminal device, a first activation command, wherein the first activation command is used to activate an SCG of a terminal device before an actual data traffic of the terminal device reaches an SCG activation threshold.

In a fourth aspect, there is provided a method for activating an SCG, the method including: sending, by a network device, a first activation command to a terminal device, the first activation command is used to activate an SCG of the terminal device before an actual data traffic of the terminal device reaches an SCG activation threshold.

In a fifth aspect, there is provided a terminal device, including: a detection unit configured to perform BFD and/or RLM on an SCG in a deactivated state. Here, initiation of the BFD and/or the RLM is determined based on predicted information of data traffic of the terminal device.

In a sixth aspect, there is provided a network apparatus, including: a first sending unit, configured to send indication information to a terminal device. Here, the indication information is related to the terminal device performing BFD and/or RLM on the SCG in the deactivated state, and initiation of the BFD and/or RLM is determined based on predicted information of data traffic of the terminal device.

In a seventh aspect, there is provided a terminal device, including: a receiving unit configured to receive a first activation command for activating an SCG of the terminal device before an actual data traffic of the terminal device reaches an SCG activation threshold.

In an eighth aspect, there is provided a network apparatus, including: a second sending unit configured to send a first activation command to a terminal device. Here, the first activation command is used to activate an SCG of the terminal device before an actual data traffic of the terminal device reaches an SCG activation threshold.

In a ninth aspect, there is provided a terminal device, including: a processor and a memory, wherein the memory is configured to store one or more computer programs and the processor is configured to invoke the computer programs in the memory to cause the terminal device to perform some or all of the steps in the method of the first aspect and/or third aspect.

In a tenth aspect, there is provided a network device, including: a processor, a memory, and a transceiver, wherein the memory is configured to store one or more computer programs and the processor is configured to invoke the computer programs in the memory to cause the network device to perform some or all of the steps in the method of the second aspect and/or fourth aspect.

In an eleventh aspect, an embodiment of the present disclosure provides a communication system including the above-described terminal device and/or network device. In another possible design, the system may further include other devices that interact with the terminal device or the network device in the solution provided by the embodiment of the present disclosure.

In a twelfth aspect, an embodiment of the present disclosure provides a computer-readable storage medium having stored thereon a computer program that causes a terminal device and/or a network device to perform part or all of the steps in the method of the above aspects.

In a thirteenth aspect, an embodiment of the present disclosure provides a computer program product, wherein the computer program product includes a non-transitory computer-readable storage medium storing a computer program operable to cause a terminal device and/or a network device to perform some or all of the steps in the methods of the above aspects. In some implementations, the computer program product may be a software installation package.

In a fourteenth aspect, an embodiment of the present disclosure provides a chip including a memory and a processor, and the processor can call and run a computer program from the memory to implement some or all of the steps described in the methods of the above aspects.

Performing RLM (RLM) and/or BFD (BFD) may cause the SCG in a deactivated state to maintain downlink fine synchronization, thereby reducing downlink fine synchronization delay in the SCG activation time, thereby reducing the SCG activation time. By determining that the RLM and/or BFD is initiated, the RLM and/or BFD can be started at an appropriate time. Based on the initating time of the RLM and/or BFD, the terminal device may not continuously perform RLM and/or BFD during the SCG inactive state, thereby reducing energy consumption of the terminal device for performing RLM and/or BFD.

### BRIEF DESCRIPTION OF THE DRAWINGS

FIG. 1 is a schematic diagram of a wireless communication system to which an embodiment of the present disclosure is applied.
FIG. 2 is an example diagram of an SCG activation process.
FIG. 3 is a schematic flowchart of a method of activating an SCG according to an embodiment of the present disclosure.
FIG. 4 is a diagram illustrating comparison between activation time for initiating BFD and/or RLM and activation time for initiating the BFD and/or RLM.
FIG. 5 is an example diagram of influence of a technical solution of predictive initiating BFD and/or RLM on energy consumption of a terminal device provided by an embodiment of the present disclosure.
FIG. 6 is a schematic flowchart of another method of activating an SCG according to an embodiment of the present disclosure.
FIG. 7 is a diagram illustrating comparison between an activation time of the non-in advance activation SCG and in advance activation SCG.
FIG. 8 is a diagram of an example activation time implemented with a combination of FIGS. 3 and 6.
FIG. 9 is a schematic structural diagram of a terminal device according to an embodiment of the present disclosure.
FIG. 10 is a schematic structural diagram of a network device according to an embodiment of the present disclosure.
FIG. 11 is a schematic structural diagram of another terminal device according to an embodiment of the present disclosure.
FIG. 12 is a schematic structural diagram of another network device provided by an embodiment of the present disclosure.
FIG. 13 is a schematic structural diagram of an apparatus for communication according to an embodiment of the present disclosure.

### DETAILED DESCRIPTION

Hereinafter, technical solutions in the present disclosure will be described with reference to the accompanying drawings.

### Communication system

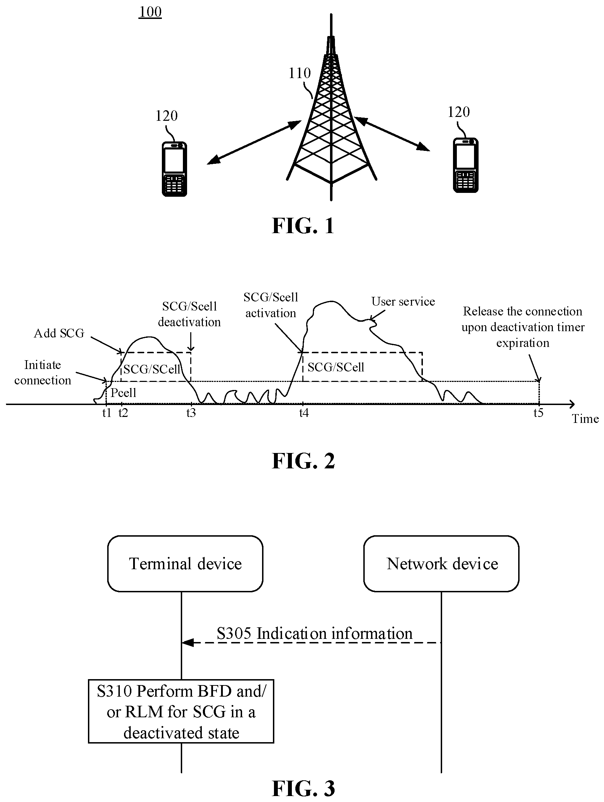

FIG. 1 shows a wireless communication system 100 to which an embodiment of the present disclosure is applied. The wireless communication system 100 may include a communication device. The communication device may include a network device 110 and a terminal device 120. The network device 110 may be a device in communication with the terminal device 120.

FIG. 1 exemplarily illustrates one network device and two terminal devices. Optionally, the wireless communication system 100 may include a plurality of network devices and another number of terminal devices may be included within the coverage range of each network device, which is not limited by the embodiment of the present disclosure.

Optionally, the wireless communication system 100 may further include other network entities such as a network controller and a mobility management entity, and the embodiments of the present disclosure are not limited thereto.

It should be understood that the technical solutions of the embodiments of the present disclosure can be applied to various communication systems, such as a 5-th generation (5G) system or a new radio (NR) system, a long term evolution (LTE) system, an LTE frequency division duplex (FDD) system, an LTE time division duplex (TDD), and the like. The technical solution provided in the present disclosure can also be applied to future communication systems, such as a sixth generation mobile communication system, a satellite communication system, and the like.

The terminal device in the embodiment of the present disclosure may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user device. The terminal device in the embodiment of the present disclosure may be a device that provides voice and/or data connectivity to a user, and may be used to connect people, objects, and machines, for example, a handheld device having a wireless connection function, a vehicle-mounted device, or the like. The terminal device in the embodiment of the present disclosure may be a mobile phone (mobile phone), a tablet (Pad), a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, a UE may act as a scheduling entity that provides sidelink signals between UEs in vehicle-to-everything (V2X) or device-to-device (D2D), etc. For example, cellular telephones and automobiles communicate with each other using sidelink signals. Communication between cellular phones and smart home devices without relaying communication signals through base stations.

The network device in the embodiment of the present disclosure may be a device for communicating with the terminal device. The network device may also include an access network device. Access network devices may provide communication coverage for a particular geographic area and may communicate with terminal devices 120 located within that coverage area. The access network device may also be referred to as a radio access network device, a base station, or the like. The access network device in the embodiment of the present disclosure may refer to a radio access network (RAN) node (or device) that connects the terminal device to the wireless network. Access network devices may broadly cover, or be substituted for, various names such as a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), A multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or the like, or a combination thereof. The base station may also refer to a communication module, modem, or chip for disposal within the aforementioned apparatus or apparatus. The base station may be a mobile switching center, a device that assumes the function of a base station in D2D, V2X, or M2M communication, a network-side device in a 6G network, a device that assumes the function of a base station in a future communication system, or the like. The base stations may support networks of the same or different access technologies. The embodiments of the present disclosure do not limit the specific technology and the specific device form adopted by the access network device.

The base station may be fixed or mobile. For example, a helicopter or drone may be configured to act as a mobile base station, and one or more cells may move according to the position of the mobile base station. In other examples, a helicopter or drone may be configured as a device to communicate with another base station.

The communication devices involved in the wireless communication system may include not only access network devices and terminal devices, but also core network elements. The core network element can be realized by a device, that is, the core network element is a core network device. It can be understood that the core network device may also be a network device.

The core network element in the embodiment of the present disclosure may include a network element that processes and forwards signaling and data of the user. For example, the core network device may include a core network access and mobility management function (AMF), a session management function (SMF), a user plane gateway, a position management function (LMF) and the like. The user plane gateway may be a server having functions such as mobility management, routing, and forwarding of user plane data, and is generally located on the network side, such as a serving gateway (SGW), a packet data network gateway (PGW), a user plane function (UPF), or the like. Of course, other network elements may also be included in the core network, which will not be listed here.

In some deployments, the network device in the embodiment of the present disclosure may refer to a CU or a DU, or the network device includes a CU and a DU. The gNB may also include an AAU.

Network devices and terminal devices can be deployed on land, including indoor or outdoor, handheld or vehicle-mounted. It can also be deployed on the water; It can also be deployed on aircraft, balloons and satellites in the air. In the embodiment of the present disclosure, the scenario in which the network device and the terminal device are located is not limited.

It should be understood that all or part of the functionality of the communication device in the present disclosure may also be implemented by software functionality running on hardware, or by virtualization functionality instantiated on a platform, such as a cloud platform.

### SCG activation and deactivation

In the dual connectivity (DC) scenario, it will consume a lot of energy for the terminal device to maintain the connection between the master cell group (MCG) and the SCG at the same time. Therefore, some communication technologies introduce the deactivated state of the SCG. When the data traffic of the terminal device is not large, the SCG may be deactivated. When the SCG is deactivated, the terminal device does not send a physical uplink shared channel (PUSCH), a sounding reference signal (SRS) and a channel state information (CSI) report on the SCG, and the terminal device does not need to monitor the physical downlink control channel (PDCCH) or receive the downlink shared channel (DL-SCH) of the SCG, thereby achieving the purpose of power saving of the terminal device. When the data traffic of the terminal device increases again and the amount of data reaches the SCG activation threshold, the master node (MN), the secondary node (SN) or the terminal device can initiate the activation process of the SCG. The activation procedure of the SCG may be triggered by the terminal device receiving the SCG activation of a media access control layer control element (MAC CE).

FIG. 2 is an example diagram of activation and deactivation of an SCG. As shown in FIG. 2, as the data traffic (that is, user traffic) of the terminal device gradually increases, a connection setup is started at time t1, and a primary cell (PCell) starts to serve the terminal device. With the increase of data traffic, at time t2, SCG addition (SCG addition) occurs. The added SCG is an active state, that is, the SCG can be used to send user services. In the subsequent process, the user traffic is gradually reduced, and at time t3, the SCG or the secondary cell (SCell) is deactivated. At time t4, the SCG or SCell is activated due to the increase in user traffic. Since the traffic volume continues to be low, at time t5, the inactivity timer expires and the connection is released.

It takes a period of time to activate the SCG, that is, there is a delay between satisfying the SCG activation condition and successful activation of the SCG. For convenience of description, the time between satisfying the SCG activation condition and successful activation will be referred to hereinafter as the SCG activation time. The SCG activation time depends on the action taken by the terminal device on the SCG in a deactivated state.

In the extreme case, the SCG activation time may be the same as the SCG addition scenario (the terminal device takes the same action to deactivate the SCG as when the SCG is released). That is, the upper limit of the SCG activation time may be the SCG adding time (that is, the primary secondary cell (PSCell) adding time delay). In this scenario, the SCG activation time may be represented by the PSCell addition delay T_{config_PSCell}. T_{config_PSCell} may satisfy: T_{config_PSCell} = T_{RRC_delay} + T_{processing} + T_{search} + T_{Δ} + T_{PSCell_DU} + 2 ms. Here, T_{RRC_delay} represents a radio resource control (RRC) processing delay, and the value may be 16 ms. T_{processing} represents the physical layer processing delay, which may include, for example, software loading delay and data structure and cache initialization delay. The software loading delay is, for example, 20 ms, and the data structure and cache initialization delay is, for example, 20 ms, for a total of 40 ms. T_{search} may represent the PSS/SSS detection delay, and its value may be 0 when the target cell is known. T_{Δ} can represent the downlink fine synchronization delay, and its value range can be 5-160ms. The T_{PSCell_DU} may represent an uncertain delay for acquiring the first physical random access channel (PRACH) occasion of the PSCell, and the value is about 10 ms.

It can be seen from the above formula that the SCG activation time can reach about 200ms. A longer SCG activation time will affect the communication process. For example, in the case of a short time of low traffic activity, the phenomenon of frequent activation and deactivation of SCG may occur, and a longer time of SCG activation will significantly affect the possibility of MCG data offload.

It can be seen from the above formula that the downlink fine synchronization delay is a major delay that affects the upper limit of SCG activation time. For the downlink fine synchronization delay, if the terminal device can always maintain the downlink fine synchronization of the SCG in a deactivated state, the delay can be completely eliminated. In some implementations, by continuously performing RLM (RLM) and/or BFD (BFD) for the SCG in a deactivated state, the downlink fine synchronization of the SCG in a deactivated state can be maintained at all times, thereby achieving elimination of the downlink fine synchronization delay. The related art (e.g., 3GPP TS 37.340) states that if the network device is configured, the terminal device can perform RLM and BFD operations for the SCG in a deactivated state.

Continuous BFD and/or RLM of the SCG in the deactivated state may introduce significant measurement and energy consumption overhead to the terminal device. However, if a relaxed measurement mechanism is adopted, it may lead to the problem of untimely or inaccurate downlink fine synchronization, thus increasing the SCG activation time.

FIG. 3 is a schematic flowchart of a method for activating an SCG according to an embodiment of the present disclosure to solve the above-described problems. The method illustrated in FIG. 3 may be performed by the terminal device. The method shown in FIG. 3 may include step S310.

In step S 310, the terminal device performs BFG and/or RLM on the SCG in the deactivated state.

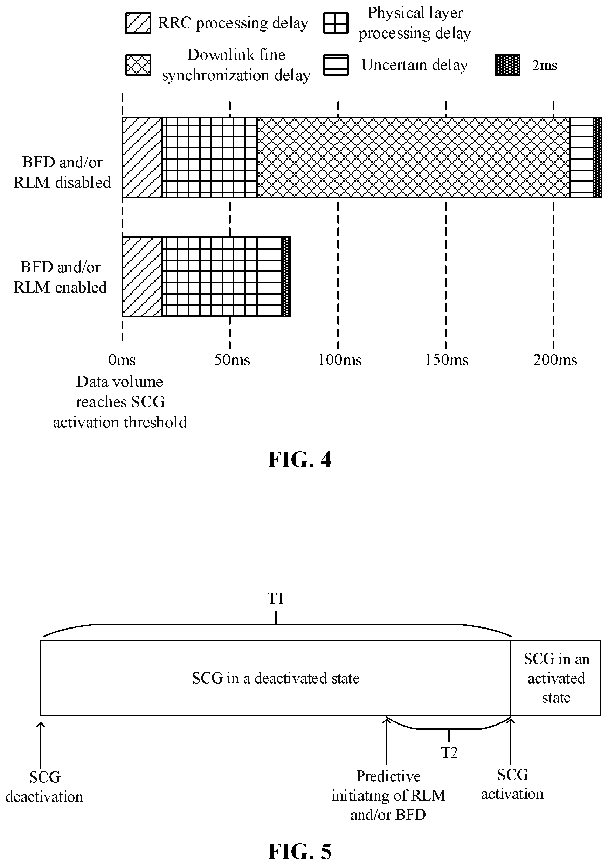

Performing BFG and/or RLM on the SCG in the deactivated state may achieve downlink fine synchronization for the SCG in the deactivated state in advance, thereby reducing the SCG activation time. As shown in FIG. 4, if BFG and/or RLM are performed before satisfying the SCG activation condition, the SCG activation time may not include the downlink fine synchronization delay, thereby reducing the SCG activation time.

Initiation of the BFG and/or RLM needs to be determined or predicted. In other words, the BFG and/or RLM is not performed until it is determined to initiate the BFG and/or RLM, and the BFG and/or RLM is not performed when the BFG and/or RLM is not initiated. That is, the BFG and/or the RLM may not be ongoing. That is, BFD and/or RLM may not be performed for a portion of the time during which the SCG is in the deactivated state. Therefore, the present disclosure can reduce the energy consumption of the terminal device.

As shown in FIG. 5, the duration of continuous RLM and/or BFD for the SCG in a deactivated state may be T1. According to the present disclosure, RLM and/or BFD may be initiated at a predicted time, and the duration of performing RLM and/or BFD is T2. It can be understood that under the same RLM and/or BFD detection cycle, the longer the RLM and/or BFD is performed, the greater the energy consumption of the terminal device. As can be seen from FIG. 5, the terminal device may not perform RLM and/or BFD during the duration T1-T2, thereby reducing the energy consumption of the terminal device.

Initiation of the BFD and/or RLM may be determined based on predicted information of the data traffic of the terminal device. The predicted information may be information related to the data traffic of the terminal device after the predicted current time.

The predicted information is related to data traffic, and the data traffic is related to SCG activation. Therefore, the future SCG activation situation can be predicted based on the predicted information. That is, the initiation of the BFD and/or RLM may be determined based on the predicted SCG activation situation. Based on this, the present disclosure can predict the future SCG activation situation according to predicted information of the data traffic of the terminal device, thereby initiating the BFD and/or RLM adaptively according to the future SCG activation situation, thereby reducing the energy consumption of the terminal device while reducing the downlink fine synchronization delay in the SCG activation time.

In some embodiments, the predicted information may be determined based on the first information. For example, the first information may be input to a first model, and the first model may output predicted information. In other words, the first model may be used to determine the predicted information from the first information.

It should be noted that the predicted information obtained based on the first model can be applied not only to the embodiments provided in the present disclosure, but also to other technical solutions requiring predicted information, and the present disclosure is not limited thereto.

Optionally, the first information may include one or more of the following information: position information of the terminal device, data arrival information of the terminal device, current time, serving cell information of the terminal device, neighboring cell information of the terminal device, carrier frequency information of the terminal device, BSR-related information of the terminal device, SR-related information of the terminal device, an SCG activation threshold configured by the network device, a first threshold, a first duration, and a second duration. These information are described separately below.

### Position information of terminal device

In some embodiments, position information of the terminal device may be used to indicate a position where the terminal device is located. For example, the position information of the terminal device may include one or more of coordinates of the terminal device, a relative position to a reference point (e.g., a network device).

In some embodiments, the position information of the terminal device may be used to indicate the movement of the terminal device. For example, the position information of the terminal device may include one or more of the following information: a plurality of positions of the terminal device within a certain duration, a position of N consecutive points of the terminal device, a moving speed of the terminal device, and a displacement of the terminal device within a certain duration. N is a positive integer. In a case where the position information of the terminal device includes a plurality of pieces of position information, the position information of the terminal device may be used to indicate a movement situation of the terminal device.

In some embodiments, the position information of the terminal device may include the position information of the terminal device at the current time and/or the position information of the terminal device in history. For example, the position information of the terminal device may include one or more of the following information of the terminal device: a position at the current time, a position of N consecutive points before the current time, position information in a second time window before the current time, and the like.

The present disclosure does not limit a device that determines position information of a terminal device. For example, the position information of the terminal device may be measured by the terminal device and/or the network device.

### Data arrival information of terminal device

In some embodiments, the data arrival information may be used to indicate an arrival amount of data and/or a data arrival time of the terminal device.

In some embodiments, the data arrival information may include a data arrival situation at a current time, and/or a historical data arrival situation. For example, the data arrival information may include one or more of the following information: a data arrival amount at the current time, a data arrival amount and/or a data arrival time of M consecutive sampling points before the current time, and a data arrival amount and/or a data arrival time within a second time window before the current time. Here, M is a positive integer.

In some embodiments, the data arrival information may be used to indicate the arrival of upstream and/or downstream data.

The present disclosure does not limit the apparatus for acquiring data arrival information. For example, the data arrival information may be determined by the terminal device and/or the network device. When the data arrival information is determined from the perspective of the terminal device, the arrival of uplink and/or downlink data may be referred to as a terminal device-side uplink and/or downlink data arrival situation. When the data arrival information is determined from the perspective of the network device, the arrival of uplink and/or downlink data may be referred to as a network device-side uplink and/or downlink data arrival situation.

### Current time

The current time may, for example, be a moment at which the first information is used. For example, the current time may be a time at which the predicted information is determined based on the first information.

The present disclosure does not limit the way of indicating the time point. As an implementation, moments of time may be represented by world time. For example, the time may be 23: 12: 34: 23 milliseconds on July 19, 2023. As another implementation, moments of time may be represented by time units. The time unit may include, for example, a frame, a subframe, an OFDM symbol, and the like. The present time and other times in the present disclosure can be represented by the above-described manner.

### Serving cell information of terminal device

The serving cell information may be related to a serving cell of the terminal device. For example, the serving cell information may include one or more of the following information: an identity of the serving cell, a signal quality of the serving cell. The identity of the serving cell may include a physical cell ID (PCI). The signal quality of the serving cell may include one or more of a reference signal receiving power (RSRP), a reference signal receiving quality (RSRQ), and a signal-to-interference-plus-noise ratio (SINR).

The serving cell information may include current information of the serving cell and/or historical information of the serving cell. Taking signal quality as an example, the serving cell information may include one or more of the following information of the serving cell: signal quality at the current time, signal quality at P consecutive sampling points before the current time, and signal quality within a second time window before the current time. Here, P is a positive integer.

### Neighbor cell information of terminal device

The neighbor cell information may be related to a neighbor cell of the terminal device. For example, the neighbor cell information may include one or more of the following information: an identity of the neighbor cell, a signal quality of the neighbor cell. The identity of the neighbor cell may include PCI. The signal quality of the neighbor cell may include one or more of: RSRP, RSRQ, SINR.

The neighboring cell information may include current information of the neighboring cell and/or historical information of the neighboring cell. Taking signal quality as an example, the neighboring cell information may include one or more of the following information of the neighboring cell: signal quality at the current time, signal quality at Q consecutive sampling points before the current time, and signal quality within a second time window before the current time. Here, Q is a positive integer.

### BSR-related information of terminal device

The BSR-related information may include current BSR information and/or historical BSR information. For example, the BSR-related information may include one or more of the following information: a BSR at the current time, a BSR of R consecutive sampling points before the current time, and a BSR within a second time window before the current time. Here, R is a positive integer.

### SR-related information of terminal device

The SR-related information may include current SR information and/or historical SRs. For example, the SR-related information may include one or more of the following information: an SR at the current time, an SR at S consecutive sampling points before the current time, and an SR within a second time window before the current time. Here, S is a positive integer.

### First threshold

The first threshold may be used to determine whether to activate the SCG according to the predicted data traffic. For example, the SCG may be activated in a case where the predicted data traffic is greater than or equal to the first threshold.

The first threshold may satisfy one or more of: a network device configuration, a preset, a predefined, a standard specified.

### First duration

The first duration is related to the first threshold. The first duration may be used to indicate that the SCG may be activated in a case where the duration of the predicted data traffic greater than or equal to the first threshold reaches the first duration. In some embodiments, the duration may be a duration. That is, the SCG may be activated when the duration of the predicted data traffic greater than or equal to the first threshold reaches the first duration.

The first duration may satisfy one or more of: specified by a network device configuration, a preset, a predefined, a standard.

### SCG activation threshold

The SCG activation threshold may be used to determine whether to activate the SCG based on actual data traffic. That is, the SCG activation threshold may be a threshold for activating the SCG in the related art or a conventional threshold for activating the SCG. For example, the SCG may be activated in a case where the actual data traffic is greater than or equal to the SCG activation threshold.

The SCG activation threshold may satisfy one or more of: configured by the network device, preset, predefined, specified by a standard.

The first threshold may be the same as the SCG activation threshold or may be different. For example, the first threshold and the SCG activation threshold may be the same threshold. That is, the SCG activation threshold may also be used to determine whether or not to activate the SCG according to the predicted data traffic. Optionally, the first threshold and the SCG activation threshold may be different values to activate the SCG using different thresholds in different situations.

### Second duration

The second duration is related to the SCG activation threshold. The second duration may be used to indicate to activate the SCG in a case where the actual data traffic is greater than or equal to the SCG activation threshold reaches the second duration.

The second duration may satisfy one or more of: being specified by a network device configuration, being preset, being predefined, or being a standard.

It should be noted that some information in the first information may be unique to the network device, that is, it can only be acquired from the network device. For example, information of the network device configuration (such as an SCG activation threshold of the network device configuration, a first threshold of the network device configuration, a first duration of the network device configuration, and a second duration of the network device configuration) may be unique to the network device. Some information in the first information may be unique to the terminal device, that is, can only be acquired from the terminal device. Some of the first information may be collected, monitored, or acquired by the network device and/or the terminal device. For example, the position information of the terminal device may be collected by the terminal device and/or the network device in real time.

In the related art, the prediction of data arrival reflects the total data arrival status of the network device, that is, the total data arrival status of all terminal devices served by the network device. The tidal characteristics of data arrival of network devices make its data arrival pattern easier to predict. Therefore, the prediction performance of the total data arrival situation of the network device is better. For a single terminal device, the arrival of data services is bursty. Therefore, it is more difficult to predict purely based on the amount of data of a single terminal device than to predict the arrival of data of a network device. At present, except for the research related to discontinuous reception (DRX), few literatures discuss the data volume prediction of a single terminal device. According to the present disclosure, it is proposed that predicted information of data traffic with granularity of the terminal device can be determined according to the first information. The information included in the first information may take into account the similarity of the movement rules of the terminal device (for example, the trajectory of commuting every day is consistent), thereby improving the prediction accuracy of the data traffic. Additionally, the first information may include more contextual information (e.g., position information, timestamp information). With the supplement of these context information, the prediction accuracy of the data traffic of the terminal device is higher. Therefore, it can be seen that by predicting the traffic information of the terminal device granularity based on the content included in the first information proposed in the present disclosure, the prediction accuracy is higher, and the service experience of the terminal device is better.

As described above, the predicted information may be determined from the first information based on the first model. The first model may be an artificial intelligence (AI) model. For example, the type of the first model may be a supervised model, a semi-supervised model, a reinforcement learning model, or the like. The present disclosure does not limit the training process of the first model. The first model used hereinafter may be a model in which inference can be performed after training.

It should be noted that the first model may be deployed on a terminal device or a network device. When the first model is deployed in the terminal device, if part or all of the information in the first information is configured or acquired by the network device, the network device may send the corresponding information to the terminal device. For example, the network device may send one or more of a first threshold, an SCG threshold, a first duration, and a second duration configured by the network device to the terminal device. When the first model is deployed in the network device, if part or all of the information in the first information is acquired by the terminal device, the terminal device may send the corresponding information to the network device. For example, the terminal device may send position information of the terminal device obtained by self-measurement to the network device.

In some embodiments, the predicted information may include one or more of the following information: a target data traffic of the terminal device within a first time window; whether the target data traffic reaches a first threshold; whether the target data traffic reaches the first threshold reaches the first time; whether the target data traffic reaches the SCG activation threshold; whether the time for which the target data traffic reaches the SCG activation threshold reaches the second time; a probability that the target data traffic reaches a first threshold; a probability that the target data traffic reaches the first threshold for a first time; the probability that the target data traffic reaches the SCG activation threshold; a probability that the time for which the target data traffic reaches the SCG activation threshold reaches the second time; a first target moment when the target data traffic reaches a first threshold; a second target instant at which the duration of the target data traffic reaches the first threshold reaches the first duration; a third target moment when the target data traffic reaches the SCG activation threshold; a fourth target time at which the time for which the target data traffic reaches the SCG activation threshold reaches the second time; a duration between the current time of the terminal device and the first target time; a duration between the current time of the terminal device and the second target time; a duration between the current time of the terminal device and the third target time; a duration between the current time of the terminal device and the fourth target time; BSR related information of the terminal device in the first time window; and SR-related information of the terminal device in the first time window.

The first time window may be a duration after the current time. The first time window may satisfy one or more of: specified by the network device configuration, preset, predefined, standard.

The BSR-related information of the terminal device in the first time window may include the BSR size in the first time window. The SR-related information of the terminal device in the first time window may include a requested resource amount in the first time window.

Based on the predicted information, the second information may be determined. Initiation of the RLM and/or BFD may be determined based on the second information. It will be appreciated that the second information may directly guide the communication process.

The second information may include one or more of whether or not the RLM and/or BFD is initiated, an initiating time of the RLM and/or BFD, and a third duration. Hereinafter, each of them will be described.

In some embodiments, if the second information indicates to initiate the RLM and/or BFD, the terminal device may initiate the RLM and/or BFD. For example, when the terminal device receives or calculates the second information, the terminal device may immediately initiate the RLM and/or BFD according to the indication of the second information.

In some embodiments, if the second information indicates the initiating time, the terminal device may initiate the RLM and/or BFD at the initiating time.

The third duration is used to indicate the duration from the initiating time of the RLM and/or BFD. For example, the third duration may be a duration between the current time and the initiating time. In some embodiments, if the second information indicates a third duration, the terminal device initiates the RLM and/or BFD after the third duration has elapsed. For example, for the terminal device, the terminal device may initiate the RLM and/or BFD at a time corresponding to a third duration after the time when the second information is received or calculated. In some embodiments, predicted information is input to a second model, and the second model may output the second information. That is, the second model may be used to determine the second information from the predicted information. In some embodiments, the predicted information may include second information. For example, the information output by the first model may also include the second information. In other words, the first model may also have the function of the second model.

The second model may be an AI model. For example, the type of the second model may be a supervised model, a semi-supervised model, a reinforcement learning model, or the like. The present disclosure does not limit the training process of the second model.

The second model may be deployed on the terminal device, or the second model may be deployed on the network device.

In some embodiments, the method shown in FIG. 3 may further include step S305.

In step S 305, the network device sends indication information to the terminal device. The indication information may be related to RLM and/or BFD performed by the terminal device on the SCG in the deactivated state. The contents included in the indication information may be different depending on the devices in which the second model is deployed.

In some embodiments, where the second model is deployed in the network device, the indication information may include the first indication information. The first indication information may be used to instruct the terminal device to initiate the RLM and/or BFD. That is, the network device may determine the second information and determine the first indication information according to the second information to instruct the terminal device to initiate the RLM and/or BFD.

The first indication information may include, for example, one or more of: second information, an initiating command, and a first timer.

In a case where the first indication information includes the second information, the terminal device may determine a timing at which the RLM and/or BFD are initiated according to the second information.

The initiating command may be used to instruct the terminal device to initiate the RLM and/or BFD. According to the second information, the network device may determine the timing of issuing the initiating command. If the second information only indicates that the RLM and/or BFD are initiated, the network device may immediately issue an initiating command to command the terminal device to initiate the RLM and/or BFD. If the second information includes the initiating time of the RLM and/or BFD, the network device may issue an initiating command at the initiating time. If the second information includes a third duration, the network device may wait for the third duration before issuing the start command.

The first timer may be used to determine a start time of BFD and/or RLM. For example, if the first indication information includes the first timer, the terminal device may initiate the first timer in response to receiving the first indication information. In response to the first timer expiring, the terminal device may initiate the RLM and/or BFD. If the second information includes the initiating time of the RLM and/or BFD and/or the third duration, the network device may immediately issue the initiating command and indicate the first timer in the first indication information. The duration of the first timer may be determined based on the initiating time and/or the third duration. For example, the duration of the first timer is equal to a difference between the current time and the initiating time, or a third time.

In a case where the second model is deployed on the terminal device, the indication information may include the third indication information. That is, the network device may send the third indication information to the terminal device. The terminal device may obtain the second information based on the third indication information and local information of the terminal device in combination with the predicted information.

Exemplarily, the third indication information may be used to indicate one or more of the following information: information related to the network device required by the second model; whether the network device sends information related to the network device; and whether the initiation of the RLM and/or BFD is determined based on the predicted information.

The information related to the network device required by the second model may include one or more of: information of the network device configuration, information measured by the network device, and the like. For example, the information related to the network device required by the second model may include one or more of a first threshold of the network device configuration, a first duration of the network device configuration, an SCG activation threshold of the network device configuration, and a second duration of the network device configuration.

If the third indication information indicates that the initiation of the RLM and/or BFD is not determined based on the predicted information, the RLM and/or BFD may be continuously performed, or the downlink fine synchronization may be performed within the SCG activation time. That is, if the third indication information indicates that the initiation of the RLM and/or BFD is not determined based on the predicted information, it is possible to fall back to the solution of the related art.

Whether the initiation of the RLM and/or BFD is determined based on the predicted information may be indirectly indicated by whether the network device sends information related to the network device. For example, in a case where the network device does not send information related to the network device, a fallback may be made to a solution of the related art.

In some embodiments, the network device may actively send the third indication information. For example, the network device may periodically send the third indication information. Optionally, in response to occurrence of the first event, the network device may send the third indication information. The first event may include, for example, SCG deactivation.

In some embodiments, the terminal device may send a second request to the network device, and the second request may be used to request the network device to send the third indication information. In response to the network device receiving the second request, the network device may send third indication information. It can be understood that, in some embodiments, the network device sends the third indication information only when the second request is received. For example, after the terminal device obtains the target data traffic, if the target data traffic is greater than the current data traffic or the previously predicted target data traffic, the terminal device may send a second request to the network device.

In a case where the second model is deployed in the network device, the terminal device may send the second indication information to the network device. The second indication information may be used to indicate one or more of the following information: information related to the terminal device required for the second model; whether or not the terminal device sends information related to the terminal device; and whether the initiation of the RLM and/or BFD is determined based on the predicted information.

The information related to the terminal device required by the second model may be measured by the terminal device itself. For example, the information related to the terminal device may include position information of the terminal device.

Whether or not the terminal device sends the information related to the terminal device may include agreeing to send the information related to the terminal device and disagreeing to send the information related to the terminal device.

If the second indication information indicates that the initiation of the RLM and/or BFD is not determined based on the predicted information, the RLM and/or BFD may be continuously performed, or the downlink fine synchronization may be performed within the SCG activation time. That is, if the second indication information indicates that the initiation of the RLM and/or BFD is not determined based on the predicted information, it is possible to fall back to the solution of the related art.

Whether or not the RLM and/or BFD is initiated is determined based on the predicted information may be indirectly indicated by whether or not the terminal device sends information related to the terminal device. For example, in a case where the terminal device does not send information related to the terminal device, it is possible to fall back to a solution of the related art.

In some embodiments, the terminal device may actively send the second indication information to the network device. In some embodiments, the network device may send a first request to the terminal device to request the terminal device to send the second indication information. In response to the terminal device receiving the first request, the terminal device may send the second indication information. It can be understood that, in some embodiments, the terminal device sends the second indication information only when the first request is received.

It should be noted that when the first indication information, the second indication information, or the third indication information include a plurality of pieces of information, the plurality of pieces of information may be reported in combination or independently. For example, when the second indication information includes information related to the terminal device and whether or not the terminal device sends information related to the terminal device, the two pieces of information may be included in one RRC message and transmitted, or may be stored in two independent RRC messages and reported respectively.

When the second model is deployed on the terminal device, the terminal device may directly initiate BFD and/or RLM at an appropriate time according to the second information output by the second model. For example, in a case where the second information only includes whether or not to initiate the BFD and/or the RLM, the terminal device immediately initiates the RLM and/or BFD without waiting. Optionally, in a case where the second information includes the initiating timing and/or the third duration of the RLM and/or BFD, the terminal device may wait until the initiating timing or the third duration before intiating the RLM and/or BFD.

The first model and the second model may be deployed on the same device, or may be deployed on different devices.

As an implementation, both the first model and the second model may be deployed on the terminal device. The terminal device may locally acquire the predicted information and the second information. This method requires higher computing power and energy consumption of the terminal device, but it can avoid reporting sensitive information of the terminal device to the network equipment, thereby improving the security and reliability of the communication process.

As another implementation, both the first model and the second model may be deployed on a network device. When part or all of the information in the first information is acquired or collected by the terminal device, the terminal device needs to continuously report the information to the network device, resulting in a large amount of data transmission.

As another implementation, the first model may be deployed on the terminal device, and the second model may be deployed on the network device. After acquiring the predicted information, the terminal device may judge whether to report the predicted information to the network device according to the predicted information. The network device may input the second information reported by the terminal device into the second model, thereby determining the initiation of the RLM and/or BFD.

It should be noted that, as described above, the first model may also include the functions of the second model. In this case, transmission of one or more of the first indication information, the second indication information, and the third indication information described above may be performed depending on whether the first model is deployed in the terminal device or the network device.

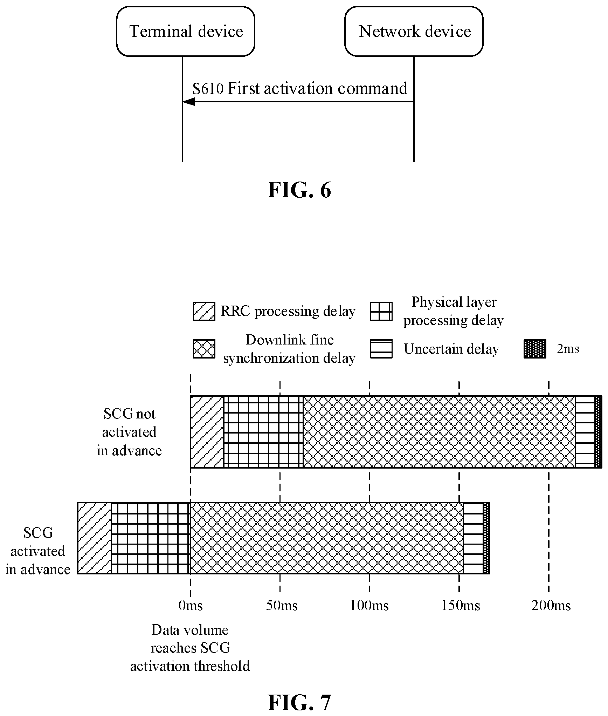

FIG. 6 is a schematic flowchart of another method for activating an SCG provided by an embodiment of the present disclosure. The method illustrated in FIG. 6 may be performed by a terminal device and a network device. The method illustrated in FIG. 6 may include step S610.

In step S610, the terminal device receives a first activation command sent by the network device.

The first activation command may be used to activate the SCG of the terminal device in advance. Activating the SCG of the terminal device in advance may include activating the SCG before the SCG activation condition is satisfied. For example, some or all of the operations related to SCG activation may be performed in advance before the SCG activation condition is satisfied. For example, the time of activation of the SCG may be predicted, and the process of activating the SCG may be started before the predicted time of activation of the SCG. According to the present disclosure, the terminal device may start activating the SCG even if the condition for activating the SCG has not yet been satisfied at the current time. At the time when the SCG activation condition is satisfied, the SCG activation procedure has been performed for a duration, so that the SCG activation time can be reduced. Optionally, the SCG activation condition may include, for example, that the actual data traffic of the terminal device reaches the SCG activation threshold. In other words, the SCG activation condition may include that the actual data traffic is greater than or equal to the SCG activation threshold.

It is to be noted that the present disclosure does not limit the method of determining the SCG activation threshold related to the first activation command. For example, the SCG activation threshold may be used to determine whether to activate the SCG based on actual data traffic. Optionally, the SCG activation threshold may be used to determine whether to activate the SCG based on the predicted data traffic. The SCG activation threshold may satisfy one or more of: being preconfigured, being configured by a network device, being specified by a protocol.

For example, before the SCG activation condition is satisfied, the RRC processing and/or the physical layer processing may be performed in advance, thereby reducing the RRC processing delay and/or the physical layer processing delay. As can be seen from the above, both the RRC processing delay and the physical layer processing delay are the main delays that affect the upper limit of SCG activation time. Therefore, based on the present disclosure, the SCG activation time can be greatly reduced.

The first activation command may be a MAC CE command. In other words, the first activation command may also be referred to as an SCG early activation MAC CE.

For ease of understanding, an exemplary description will be made below with reference to FIG. 7.

As shown in FIG. 7, in the scheme of activating the SCG in advance, RRC processing and physical layer processing may be performed in advance before the amount of data reaches the SCG activation threshold. As can be seen from FIG. 7, compared with the related art, the RRC processing and the physical layer processing are performed in advance, so that the SCG activation time is greatly reduced.

In some embodiments, the first activation command may be determined based on predicted information of data traffic of the terminal device. The description of the predicted information can be referred to above. For example, by predicting the target data traffic of the terminal device, it may be determined that the data traffic of the terminal device satisfies the SCG activation condition at a first time in the future, and the first activation command may be determined according to the first time.

In some embodiments, the predicted information may be determined from the first information. In some embodiments, the first information may be input to the first model to determine the predicted information. The forecasting information, the first information, or the first model may be referred to above, and will not be described herein.

In some embodiments, the first activation command may be determined based on the third information. The third information may be determined based on the predicted information. The third information may include, for example, one or more of whether or not the first activation command is transmitted, the timing of transmission of the first activation command, and the fourth duration. The fourth duration may be used to indicate a duration from a transmission time of the first activation command.

In some embodiments, the time at which the network device sends the first activation command may be determined according to the third information. For example, the network device may send the first activation command immediately after determining the first activation command. Optionally, the network device may retransmit the first activation command a fourth time after determining the first activation command or at the time of transmission of the first activation command.

In some embodiments, the timing at which the terminal device executes the first activation command may be determined according to the third information. For example, upon receiving the first activation command, the terminal device may immediately start executing the first activation command. Optionally, the terminal device may start executing the first activation command for a fourth time after receiving the first activation command. As another example, the network device may send a second timer to the terminal device. The second timer may be used to determine an execution time of the first activation command. Exemplarily, the terminal device may execute the first activation command at a moment when the second timer expires.

The third information may be determined based on the third model. The third model may be used to determine the third information from the predicted information. In other words, the input of the third model may be predicted information, and the output of the third model may be third information.

In some embodiments, the third information may be included in the predicted information. For example, the predicted information output by the first model may include the third information. That is, the first model may include the function of the third model, that is, the first model may also output the third information.

The third model may be deployed on a terminal device or a network device.

In a case where the third model is deployed on the network device, the network device may send a first activation command according to the third information.

For example, in a case where the third information only includes whether or not to send the first activation command, the network device may immediately send the first activation command. Optionally, when the third information includes the transmission time of the first activation command and/or the fourth time, the network device may wait until the transmission time or the fourth time of the first activation command before transmitting the first activation command. Optionally, when the third information includes the transmission time of the first activation command and/or the fourth duration, the network device may immediately send the first activation command and the second timer. The terminal device initiates the second timer after receiving the second timer. When the second timer expires, the terminal device starts executing the first activation command.

In a case where the third model is deployed on the terminal device, the terminal device needs to send the third information to the network device so that the network device sends the first activation command according to the third information.

The first model and the third model may be deployed on the same device, or may be deployed on different devices.

As an implementation, both the first model and the third model may be deployed on the terminal device. The terminal device may locally acquire the predicted information and the third information. This method requires higher computing power and energy consumption of the terminal device, but it can avoid reporting sensitive information of the terminal device to the network equipment, thereby improving the security and reliability of the communication process.

As another implementation, both the first model and the third model may be deployed on a network device. When part or all of the information in the first information is acquired or collected by the terminal device, the terminal device needs to continuously report the information to the network device, resulting in a large amount of data transmission.

As another implementation, the first model may be deployed on the terminal device, and the third model may be deployed on the network device. Since the third model is not deployed on the terminal device, this method can reduce the demand for energy consumption and computing power of the terminal device. Further, the terminal device may report the predicted information to the network device instead of the first information. Since the first information includes sensitive information of the terminal device, this method can also avoid reporting the sensitive information of the terminal device to the network device. Optionally, after acquiring the predicted information, the terminal device may determine whether to report the predicted information to the network device according to the predicted information, thereby reducing the amount of information to be reported. For example, the terminal device may determine whether it is necessary to activate the SCG. The terminal device may report the predicted information to the network device only when it is necessary to activate the SCG.

In some embodiments, in a case where the terminal device fails to activate the SCG (e.g., fails to decode the first activation command) based on the first activation command, the terminal device may activate the SCG based on the second activation command. The second activation command may be used to activate the SCG when the SCG satisfies the activation condition. It can be understood that the network device may issue a second activation command to activate the SCG when the actual data traffic of the terminal device satisfies the SCG activation condition. For example, the second activation command may be an SCG activation command in the related art.

It should be noted that the first activation command and the second activation command can be distinguished by an explicit identification.

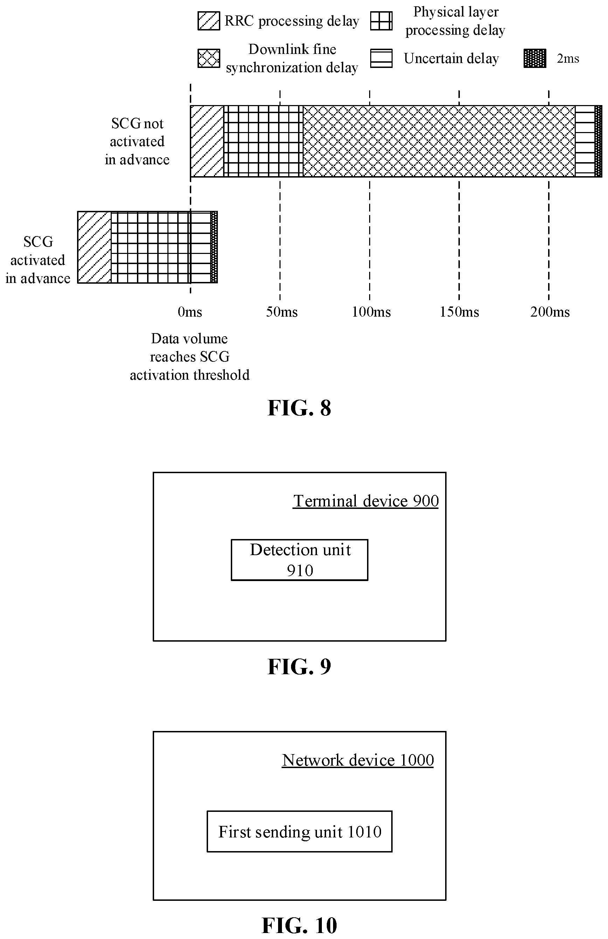

It should be noted that the above-described embodiments may be implemented alone or in combination. For example, initiation of the RLM and/or BFD may be determined according to the predicted information of the data traffic of the terminal device, and the first activation command may be sent according to the predicted information. As shown in FIG. 8, when the above two schemes are combined, RRC processing and physical layer processing can be performed before the SCG activation time, and the downlink fine synchronization delay can also be reduced. As can be seen from Fig. 8, the SCG activation time can be reduced to less than 50ms.

For convenience of understanding, the present disclosure will be described in detail below with reference to a first embodiment to third embodiment.

### First embodiment

The first embodiment provides a method for predicting data traffic of a terminal device.

In the first embodiment, the predicted information may be obtained by inputting the first information into the first model. The predicted information may be input to the fourth model. The fourth model may output a data traffic prediction result of the terminal device. The fourth model may include the second model and/or the third model described above. That is, the data traffic prediction result of the terminal device output by the fourth model may include the second information and/or the third information.

The first information may be information obtained by real-time collection/monitoring of the terminal device and/or the network device. The first information may be used to predict the arrival of data of the terminal device to obtain predicted information.

The first information may include one or more of the following information.
1) Position information of the terminal device. For example, the terminal device position information may include one or more of a position at a current time, a position at N consecutive points before the current time, or a position within a second time window before the current time. Here, the second time window length is defined by the network side.
2) Data arrival information. For example, the data arrival information may include terminal device-side uplink/downlink data arrival information and/or network device-side uplink/downlink data arrival information. The data arrival information may be a data arrival amount and/or a data arrival time at a current time, N consecutive sampling points before the current time, or within a second time window before the current time.
3) The current time.
4) Serving cell information. For example, the serving cell information may include one or more of PCI, RSRP, RSRQ, or SINR. The serving cell information may be information corresponding to the following times: a current time, N consecutive sampling points before the current time, or within a second time window before the current time.
5) Neighboring cell information. For example, the neighbor cell information may include one or more of PCI, RSRP, RSRQ, or SINR. The neighboring cell information may be corresponding information of the following times: a current time, N consecutive sampling points before the current time, or within a second time window before the current time.
6) Carrier frequency information.
7) BSR information. For example, the BSR information may include one or more of a BSR at a current time, a BSR of N consecutive sampling points before the current time, or a BSR within a second time window before the current time.
8) SR request resource amount. For example, the SR request resource amount may include one or more of: the request resource amount within the second time window before the current time)
9) SCG activation threshold configured by the network device.
10) A first threshold of network device configuration. The first threshold is used to determine whether or not the SCG is activated according to the predicted information. For example, when the predicted traffic data arrival amount is higher than the first threshold, the SCG may be activated. Optionally, the first information may further include a first duration. When the first duration exists, the SCG may be activated when the predicted traffic data arrival amount continues to exceed the first threshold within the first duration.

It should be noted that, among the above-described information, except that the SCG activation threshold configured by the network device, the first threshold configured by the network side, and the first time duration configured by the network device are unique information to the network device, the remaining information may be collected/acquired by the network device or the terminal device.

The first model may be used to perform prediction of data reach. The first model may be an AI model. For example, the first model may be a supervised model, a semi-supervised model, or a reinforcement learning model. The present disclosure does not limit the specific form and training process of the first model. In the first embodiment, the second embodiment, or the third embodiment, it is assumed that the first model has been trained by default, and the inference of the model can be directly performed.

The predicted information may indicate that the data of the terminal device arrives at the prediction result. The predicted information may include one or more of the following information.
1) The data arrival amount in the first time window after the current time of the terminal device. Here, the first time window may be defined by the network device.
2) Whether that data of the terminal device in the first time window after the current time reach the SCG activation threshold.
3) The probability that the data of the terminal device reaches the SCG activation threshold in the first time window after the current time.
4) A time when the data in the first time window reaches the SCG activation threshold after the current time of the terminal device.
5) The moment when the data arrival reaches the SCG activation threshold.
6) The time from the current time to the time when the data arrival reaches the SCG activation threshold.
7) Whether that data arrival amount of the terminal device in the first time window after the current time reaches the first threshold.
8) A probability that the data arrival amount of the terminal device reaches a first threshold in a first time window after the current time.
9) A time when the data arrival amount in the first time window reaches the first threshold after the current time of the terminal device.
10) The moment when the data arrival amount reaches the first threshold.
11) The time from the current time until the data arrival amount reaches the first threshold.
12) BSR information of the terminal device in the first time window after the current time.
13) The amount of SR request resource of the terminal device in the first time window after the current time.

The fourth model may be used to further process the output result (predicted information) of the first model to acquire a result/command (hereinafter represented by the terminal device data traffic prediction result) capable of directly guiding the optimization of the communication network.

The predicted result of the data traffic of the terminal device may include, for example, a result (i.e., second information) related to initiation of RLM and/or BFD. The result related to initiation of RLM and/or BFD may include one or more of: whether the RLM and/or BFD is initiated, the time (i.e., the initiating time) at which the RLM and/or BFD is initiated, and the time (i.e., the third duration) from which the RLM and/or BFD is initiated.

The predicted result of the data traffic of the terminal device may include, for example, an SCG activation MAC CE related result (i.e., third information). The SCG activation MAC CE related result may include one or more of the following information: whether or not the SCG advance activation MAC CE is transmitted, the time (i.e., the transmission time) at which the SCG advance activation MAC CE is sent, and the time (i.e., the fourth time) from which the transmission of SCG advance activation MAC CE is initiated.

### Second embodiment

The terminal device may start the RLM and/or BFD measurement of the deactivated state SCG according to the locally obtained RLM and/or BFD activation related result and/or the network side instruction command in the locally obtained data traffic prediction result of the terminal device, so as to realize downlink fine synchronization of the deactivated state SCG in advance, reduce the SCG activation time and reduce energy consumption of the terminal device.

Examples are given below for the following three situations.

In the first case, the fourth model is deployed in the terminal device, and the terminal device determines to initiate the RLM and/or BFD based on the local information and the network device side information.

If the fourth model is deployed in the terminal device, the terminal device needs to obtain network-side information (for example, a first threshold and a first duration configured by the network side) and calculate and obtain a result related to RLM and/or BFD activation in combination with local information of the terminal device.

If the result only indicates that RLM and/or BFD is initiated, the terminal device does not need to wait and initiates the RLM and/or BFD operation.

If the result includes a time at which the RLM and/or BFD is initiated or a time from which the RLM and/or BFD is initiated, the terminal device initiates the RLM and/or BFD measurement after the time at which the RLM and/or BFD is initiated or after the time from which the RLM and/or BFD is initiated has elapsed.

A manner that the terminal device acquires information of the network device may be a first manner or a second manner.

In a first manner, the terminal device actively sends an application (i.e., a second request) to the network device according to the predicted information to request information of the network device. For example, when the terminal device obtains the data arrival amount in the second time window after the current time of the terminal device through the first model, and the data arrival amount is higher than the previous prediction result, the terminal device may request the SCG activation threshold and/or the first threshold from the network device to determine whether or not to activate the SCG.

In a second manner, the network device actively sends the information of the network device. For example, when the SCG is deactivated, the network device may issue the SCG activation threshold and/or the first threshold to the terminal device.

In a second case, the fourth model is deployed in the network device, and the network device judges to enable RLM and/or BFD based on local information.

The network may send a result related to initiation of the RLM and/or BFD to the terminal device. The terminal device determines the time at which a result related to initiation of the RLM and/or BFD is initiated according to the result related to initiation of the RLM and/or BFD. The determining process of the terminal device is similar to the first case, and will not be repeated here.

The network device may issue an initiating command for an RLM and/or BFD to the terminal device according to the result related to initiation of RLM and/or BFD to indicate whether to initiate the RLM and/or BFD.

Optionally, if the result related to initiation of RLM and/or BFD only indicates to initiate the RLM and/or BFD, the network device may issue an initiating command to the terminal device. Based on the initiating command, the terminal device initiates measurement.

Optionally, if the result related to the initiation of the RLM and/or BFD includes a time at which the RLM and/or BFD is initiated or a time from which the RLM and/or BFD is initiated, the network device may wait for the time to reach or wait for the time to issue an initiating command for an RLM and/or BFD to the terminal device. Based on the initiating command, the terminal device initiates measurement.

Optionally, if the result related to initiation of RLM and/or BFD includes a time at which the RLM and/or BFD is initiated or a time from which the RLM and/or BFD is initiated, the network device may issue an RLM and/or BFD initiating command and a first timer to the terminal device. The terminal device may initiate the measurement after the expiration of the first timer. The duration of the first timer may be equal to a duration until the RLM and/or BFD are initiated, or may be equal to a difference between the time at which the RLM and/or BFD are initiated and the current time.

In a third case, the fourth model is deployed on network equipment. The network device may judge to initiate the RLM and/or BFD in combination with the local information and the information of the terminal device.

When the fourth model is deployed in a network device and it is impossible to determine whether or not RLM and/or BFD is initiated only by the information acquired by the network, the determination needs to be made in combination with the information of the terminal device (for example, the position information of the terminal device).

The process in which the network device acquires the information of the terminal device may include: the network device side issues an information request command (i.e., a first request) to the terminal device; according to the request command, the terminal device returns the second indication information.

The second indication information may include: agreeing to report information or information of the terminal device requested by a network-side; or disagreeing to report the information of the terminal device requested by the network side. In the case where the reporting is not agreed, the data traffic prediction of the terminal device cannot be completed, and the terminal device can fall back to the technical solution in the related art, that is, the RLM and/or BFD can be continuously performed or the downlink fine synchronization can be performed within the SCG activation time.

If the second indication information includes both the agreement to report information and the information of the terminal device requested by the network device side, the two pieces of information may be combined and reported or may be reported independently. For example, the information of the terminal device agreeing to report information and the information of the network-side request may be included in one RRC message and transmitted, or may be stored in two independent RRC messages and reported respectively.

### Third embodiment

In the third embodiment, the terminal device may receive the SCG to activate the MAC CE in advance and complete the RRC processing and the physical layer processing according to the instruction command of the network device, thereby reducing the SCG activation time.

If the fourth model is deployed in the terminal device, the terminal device may report the SCG activation MAC CE related result calculated locally to the network side. If the fourth model is deployed in the network device, the network device may locally calculate the SCG activation MAC CE related result.

In some embodiments, if the SCG activation MAC CE related result only indicates that the SCG early activation MAC CE is transmitted, the network device may issue the SCG early activation MAC CE to the terminal device. When the MAC CE is received, the terminal device may start RRC processing and physical layer processing.

In some embodiments, the SCG early activation MAC CE may explicitly indicate that the MAC CE is an early activation command, rather than the SCG activation MAC CE in the related art. If the SCG early activation fails (for example, the SCG early activation MAC CE decoding fails), the SCG activation method in the related art can be fallback, that is, the SCG activation MAC CE in the related art can be used to activate the SCG.

The network device may send the SCG early activation MAC CE and the second timer if the SCG early activation MAC CE related result includes a time when the SCG early activation MAC CE is sent or a time until the transmission SCG early activation MAC CE is initiated. The second timer may be used to indicate an execution timing at which the SCG activates the MAC CE in advance, and the second timer duration is equal to a difference between the timing at which the SCG activates the MAC CE in advance and the current timing, or a time duration at which the transmission of the SCG activates the MAC CE in advance is initiated. When the second timer expires, the terminal device may start the RRC processing and the physical layer processing.

If the related result of the SCG activation MAC CE includes a time when the SCG early activation MAC CE is sent or a time until the SCG early activation MAC CE is initiated, the network device may wait until the time when the SCG early activation MAC CE is initiated or a time until the SCG early activation MAC CE is initiated, and then send the SCG early activation MAC CE to the terminal device. The terminal device can enable RRC processing and physical layer processing.

Method embodiments of the present disclosure are described in detail above, and device embodiments of the present disclosure are described in detail below. It should be understood that the description of the method embodiment and the description of the device embodiment correspond to each other, and therefore, the portions not described in detail can be referred to the foregoing method embodiments.

FIG. 9 is a schematic structural diagram of a terminal device 900 according to an embodiment of the present disclosure. The terminal device 900 may include a detection unit 910.

The detection unit 910 is configured to perform BFD and/or RLM for the SCG in the deactivated state. Here, initiation of the BFD and/or RLM is determined based on predicted information of the data traffic of the terminal device.

In some embodiments, the predicted information is determined based on first information, the first information including one or more of: position information of the terminal device; data arrival information of the terminal device; current time; serving cell information of the terminal device; neighbor cell information of the terminal device; carrier frequency information of the terminal device; cache status report BSR related information of the terminal device; scheduling request SR related information of the terminal device; an SCG activation threshold configured by the network device; a first threshold configured by the network device, the first threshold for determining whether to activate the SCG according to the predicted data traffic; and a first duration for indicating that the SCG is activated in a case where the duration of the predicted data traffic greater than or equal to the first threshold reaches the first duration.

In some embodiments, the predicted information is determined based on a first model, and the first model is used to determine the predicted information from the first information.

In some embodiments, the first model is deployed on the terminal device; or the first model is deployed on a network device.

In some embodiments, the predicted information includes one or more of: a target data traffic of the terminal device within a first time window after the current time; whether the target data traffic reaches a first threshold, the first threshold being used to determine whether to activate the SCG according to the predicted data traffic; whether the target data traffic reaches the first threshold reaches the first time; whether the target data traffic reaches an SCG activation threshold, and the SCG activation threshold is used to determine whether to activate the SCG according to the actual data traffic; whether the time for which the target data traffic reaches the SCG activation threshold reaches the second time; a probability that the target data traffic reaches a first threshold; a probability that the target data traffic reaches the first threshold for a first time; the probability that the target data traffic reaches the SCG activation threshold; a probability that the time for which the target data traffic reaches the SCG activation threshold reaches the second time; a first target moment at which the target data traffic reaches a first threshold; a second target instant at which the duration of the target data traffic reaches the first threshold reaches the first duration; a third target moment when the target data traffic reaches the SCG activation threshold; a fourth target time at which the time for which the target data traffic reaches the SCG activation threshold reaches the second time; a duration between the current time of the terminal device and the first target time; a duration between the current time of the terminal device and the second target time; a duration between the current time of the terminal device and the third target time; a duration between the current time of the terminal device and the fourth target time; BSR-related information of the terminal device in a first time window after the current time; and SR-related information of the terminal device within a first time window after the current time.

In some embodiments, the initiation of the BFD and/or the RLM is determined based on the predicted information, including: the initiation of the BFD and/or the RLM is determined based on the second information, and the second information is determined based on the predicted information; wherein the second information includes one or more of: whether to initiate BFD and/or RLM; an initiating time of BFD and/or RLM; and a third duration indicating a duration from an initiating time of BFD and/or RLM.

In some embodiments, the detection unit is configured to: initiate the BFD and/or the RLM for the SCG in the deactivated state if the second information indicates to initiate the BFD and/or the RLM; or if the second information indicates an initiating time, initiate BFD and/or RLM for the SCG in the deactivated state at the initiating time; or if the second information indicates a third duration, initiate BFD and/or RLM for the SCG in the deactivated state after the third duration has elapsed.

In some embodiments, the second information is determined based on a second model, and the second model is used to determine the second information from the predicted information.

In some embodiments, the second model is deployed on the terminal device; or the second model is deployed on the network device.

In some embodiments, the second model is deployed on the network device, and the terminal device is further configured to: receive first indication information sent by the network device, and the first indication information is configured to indicate the terminal device to initiate BFD and/or RLM.

In some embodiments, the first indication information includes one or more of the following information: second information; an initiating command for instructing the terminal device to initiate BFD and/or RLM; and a first timer for determining an initiating time of BFD and/or RLM.

In some embodiments, the second model is deployed on the network device, and the terminal device is further configured to: send second indication information to the network device; wherein the second indication information is used to indicate one or more of the following information: information related to the terminal device required for the second model; whether or not the terminal device sends information related to the terminal device; and whether the initiation of BFD and/or RLM is determined based on the predicted information.

In some embodiments, sending the second indication information to the network device includes sending the second indication information to the network device in response to the terminal device receiving the first request sent by the network device.

In some embodiments, the second model is deployed on the terminal device, and the terminal device is further configured to: receive third indication information sent by the network device; wherein the third indication information is used to indicate one or more of the following information: information related to the network device required by the second model; whether the network device sends information related to the network device; and whether the initiation of BFD and/or RLM is determined based on the predicted information.

In some embodiments, the terminal device is further configured to: send a second request; wherein the second request is used to request the network device to send the third indication information.

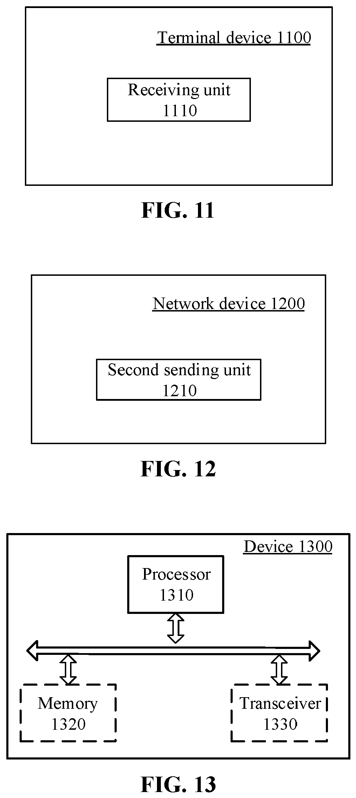

In an optional embodiment, the detection unit 910 may be the processor 1310. The terminal device 900 may further include a memory 1320 and a transceiver 1330, as shown in FIG. 13.

FIG. 10 is a schematic structural diagram of a network device 1000 according to an embodiment of the present disclosure. The network device 1000 includes a first sending unit 1010.

The first sending unit 1010 is configured to send indication information to the terminal device; wherein the indication information is related to the terminal device performing BFD and/or RLM for the SCG in the deactivated state, and initiation of the BFD and/or RLM is determined based on the predicted information of the data traffic of the terminal device.

In some embodiments, the predicted information is determined based on first information, the first information including one or more of: position information of the terminal device; data arrival information of the terminal device; current time; serving cell information of the terminal device; Neighbor cell information of the terminal device; carrier frequency information of the terminal device; cache status report BSR related information of the terminal device; Scheduling request SR related information of the terminal device; an SCG activation threshold configured by the network device; a first threshold configured by the network device, the first threshold for determining whether to activate the SCG according to the predicted data traffic; and a first duration for indicating that the SCG is activated in a case where the duration of the predicted data traffic greater than or equal to the first threshold reaches the first duration.

In some embodiments, the predicted information is determined based on a first model, and the first model is used to determine the predicted information from the first information.

In some embodiments, the first model is deployed on the terminal device; or the first model is deployed on a network device.

In some embodiments, the predicted information includes one or more of: a target data traffic of the terminal device within a first time window after the current time; whether the target data traffic reaches a first threshold, the first threshold being used to determine whether to activate the SCG according to the predicted data traffic; whether the target data traffic reaches the first threshold reaches the first time; whether the target data traffic reaches an SCG activation threshold, and the SCG activation threshold is used to determine whether to activate the SCG according to the actual data traffic; whether the time for which the target data traffic reaches the SCG activation threshold reaches the second time; a probability that the target data traffic reaches a first threshold; a probability that the target data traffic reaches the first threshold for a first time; the probability that the target data traffic reaches the SCG activation threshold; a probability that the time for which the target data traffic reaches the SCG activation threshold reaches the second time; a first target moment at which the target data traffic reaches a first threshold; a second target instant at which the duration of the target data traffic reaches the first threshold reaches the first duration; a third target moment when the target data traffic reaches the SCG activation threshold; a fourth target time at which the time for which the target data traffic reaches the SCG activation threshold reaches the second time; a duration between the current time of the terminal device and the first target time; a duration between the current time of the terminal device and the second target time; a duration between the current time of the terminal device and the third target time; a duration between the current time of the terminal device and the fourth target time; BSR-related information of the terminal device in a first time window after the current time; and SR-related information of the terminal device within a first time window after the current time.

In some embodiments, the initiation of the BFD and/or the RLM is determined based on the predicted information, including: the initiation of the BFD and/or the RLM is determined based on the second information, and the second information is determined based on the predicted information; wherein the second information includes one or more of: whether to initiate BFD and/or RLM; an initiating time of BFD and/or RLM; and a third duration indicating a duration from an initiating time of BFD and/or RLM.

In some embodiments, the second information is determined based on a second model, and the second model is used to determine the second information from the predicted information.

In some embodiments, the second model is deployed on the terminal device; or the second model is deployed on the network device.

In some embodiments, the second model is deployed on the network device, and the indication information includes first indication information, and the first indication information is used to instruct the terminal device to initiate BFD and/or RLM.

In some embodiments, the first indication information includes one or more of the following information: second information; an initiating command for instructing the terminal device to initiate BFD and/or RLM; and a first timer for determining an initiating time of BFD and/or RLM.

In some embodiments, the second model is deployed on the network device, and the network device is further configured to: receive second indication information sent by the terminal device; wherein the second indication information is used to indicate one or more of the following information: information related to the terminal device required for the second model; whether or not the terminal device sends information related to the terminal device; and whether the initiation of BFD and/or RLM is determined based on the predicted information.

In some embodiments, receiving the second indication information sent by the terminal device includes receiving the second indication information sent by the terminal device in response to the terminal device receiving the first request sent by the network device.

In some embodiments, the second model is deployed on the terminal device, and the indication information includes third indication information, wherein the third indication information is used to indicate one or more of the following information: information related to the network device required by the second model; whether the network device sends information related to the network device; and whether the initiation of BFD and/or RLM is determined based on the predicted information.

In some embodiments, the network device is further configured to: receive a second request sent by the terminal device; wherein the second request is used to request the network device to send the third indication information.

In an optional embodiment, the first sending unit 1010 may be a transceiver 1330. The network device 1000 may also include a processor 1310 and a memory 1320, as specifically shown in FIG. 13.

FIG. 11 is a schematic structural diagram of a terminal device 1100 according to an embodiment of the present disclosure. The terminal device 1100 includes a receiving unit 1110.

The receiving unit 1110 is configured to receive a first activation command for activating the SCG of the terminal device before the actual data traffic of the terminal device reaches the SCG activation threshold.

In some embodiments, the first activation command is determined based on predicted information of data traffic of the terminal device.

In some embodiments, the predicted information is determined based on first information, the first information including one or more of: position information of the terminal device; Data arrival information of the terminal device; Current time; Serving cell information of the terminal device; Neighbor cell information of the terminal device; Carrier frequency information of the terminal device; BSR-related information of the terminal device; SR-related information of the terminal device; an SCG activation threshold configured by the network device, wherein the SCG activation threshold is used to determine whether or not to activate the SCG according to the actual data traffic; a first threshold configured by the network device, the first threshold for determining whether to activate the SCG according to the predicted data traffic; and a first duration for indicating that the SCG is activated in a case where the duration of the predicted data traffic greater than or equal to the first threshold reaches the first duration.

In some embodiments, the predicted information is determined based on a first model, and the first model is used to determine the predicted information from the first information.

In some embodiments, the first model is deployed on the terminal device; or the first model is deployed on a network device.

In some embodiments, the predicted information includes one or more of: a target data traffic of the terminal device within a first time window after the current time; whether the target data traffic reaches a first threshold, the first threshold being used to determine whether to activate the SCG according to the predicted data traffic; whether the target data traffic reaches the first threshold reaches the first time; whether the target data traffic reaches an SCG activation threshold, and the SCG activation threshold is used to determine whether to activate the SCG according to the actual data traffic; whether the time for which the target data traffic reaches the SCG activation threshold reaches the second time; a probability that the target data traffic reaches a first threshold; a probability that the target data traffic reaches the first threshold for a first time; the probability that the target data traffic reaches the SCG activation threshold; a probability that the time for which the target data traffic reaches the SCG activation threshold reaches the second time; a first target moment at which the target data traffic reaches a first threshold; a second target instant at which the duration of the target data traffic reaches the first threshold reaches the first duration; a third target moment when the target data traffic reaches the SCG activation threshold; a fourth target time at which the time for which the target data traffic reaches the SCG activation threshold reaches the second time; a duration between the current time of the terminal device and the first target time; a duration between the current time of the terminal device and the second target time; a duration between the current time of the terminal device and the third target time; a duration between the current time of the terminal device and the fourth target time; BSR-related information of the terminal device in a first time window after the current time; and SR-related information of the terminal device within a first time window after the current time.

In some embodiments, the first activation command is determined based on predicted information of data traffic of the terminal device, including: the first activation command is determined based on third information, and the third information is determined based on the predicted information; wherein the third information includes one or more of: whether to send the first activation command; a transmission time of the first activation command; and a fourth duration indicating a duration from the transmission time.

In some embodiments, if the third information indicates the transmission timing or the fourth duration, the terminal device is further configured to receive a second timer sent by the network device, and the second timer is configured to determine the execution timing of the first activation command.

In some embodiments, the third information is determined based on a third model, and the third model is used to determine the third information from the predicted information.

In some embodiments, the third model is deployed on the terminal device; or the third model is deployed on the network device.

In some embodiments, if the third model is deployed on the terminal device, the terminal device is further configured to send the third information to the network device.

In some embodiments, the first activation command is a MAC CE command.

In some embodiments, the terminal device is further configured to: receive a second activation command sent by the network device, and the second activation command is configured to activate the SCG when the actual data traffic of the terminal device reaches an SCG activation threshold; In a case where activation of the SCG based on the first activation command fails, the SCG is activated based on the second activation command.

In an optional embodiment, the receiving unit 1110 may be a transceiver 1330. The terminal device 1100 may further include a processor 1310 and a memory 1320, as specifically shown in FIG. 13.

FIG. 12 is a schematic structural diagram of a network device 1200 according to an embodiment of the present disclosure. The network device 1200 includes a second sending unit 1210.

The second sending unit 1210 is configured to send a first activation command to the terminal device, and the first activation command is configured to activate the SCG of the terminal device before the actual data traffic of the terminal device reaches the SCG activation threshold.

In some embodiments, the first activation command is determined based on predicted information of data traffic of the terminal device.

In some embodiments, the predicted information is determined based on first information, the first information including one or more of: position information of the terminal device; data arrival information of the terminal device; current time; serving cell information of the terminal device; neighbor cell information of the terminal device; Carrier frequency information of the terminal device; BSR-related information of the terminal device; SR-related information of the terminal device; an SCG activation threshold configured by the network device, wherein the SCG activation threshold is used to determine whether to activate the SCG according to the actual data traffic; a first threshold configured by the network device, the first threshold for determining whether to activate the SCG according to the predicted data traffic; and a first duration for indicating that the SCG is activated in a case where the duration of the predicted data traffic greater than or equal to the first threshold reaches the first duration.

In some embodiments, the predicted information is determined based on a first model, and the first model is used to determine the predicted information from the first information.

In some embodiments, the first model is deployed on the terminal device; or the first model is deployed on a network device.

In some embodiments, the predicted information includes one or more of: a target data traffic of the terminal device within a first time window after the current time; whether the target data traffic reaches a first threshold, the first threshold being used to determine whether to activate the SCG according to the predicted data traffic; whether the target data traffic reaches the first threshold reaches the first time; whether the target data traffic reaches an SCG activation threshold, and the SCG activation threshold is used to determine whether to activate the SCG according to the actual data traffic; whether the time for which the target data traffic reaches the SCG activation threshold reaches the second time; a probability that the target data traffic reaches a first threshold; a probability that the target data traffic reaches the first threshold for a first time; the probability that the target data traffic reaches the SCG activation threshold; a probability that the time for which the target data traffic reaches the SCG activation threshold reaches the second time; a first target moment at which the target data traffic reaches a first threshold; a second target instant at which the duration of the target data traffic reaches the first threshold reaches the first duration; a third target moment when the target data traffic reaches the SCG activation threshold; a fourth target time at which the time for which the target data traffic reaches the SCG activation threshold reaches the second time; a duration between the current time of the terminal device and the first target time; a duration between the current time of the terminal device and the second target time; a duration between the current time of the terminal device and the third target time; a duration between the current time of the terminal device and the fourth target time; BSR-related information of the terminal device in a first time window after the current time; and SR-related information of the terminal device within a first time window after the current time.

In some embodiments, the first activation command is determined based on predicted information of data traffic of the terminal device, including: the first activation command is determined based on third information, and the third information is determined based on the predicted information;
Here, the third information includes one or more of: whether to send the first activation command; a transmission time of the first activation command; and a fourth duration indicating a duration from the transmission time.

In some embodiments, if the third information indicates the transmission time or the fourth time, the network device is further configured to send a second timer to the terminal device, and the second timer is configured to determine the execution time of the first activation command.

In some embodiments, if the third information indicates the transmission time or the third duration, the network device sends the first activation command to the terminal device, including: the network device sends the first activation command at the transmission time.

In some embodiments, the third information is determined based on a third model, and the third model is used to determine the third information from the predicted information.

In some embodiments, the third model is deployed on the terminal device; or the third model is deployed on the network device.

In some embodiments, if the third model is deployed on the terminal device, the network device is further configured to: receive the third information sent by the terminal device.

In some embodiments, the first activation command is a MAC CE command.

In some embodiments, the network device is further configured to: send a second activation command to the terminal device; wherein the second activation command is used to activate the SCG in a case where the actual data traffic of the terminal device reaches the SCG activation threshold, and in a case where the activation of the SCG based on the first activation command fails, the operation of activating the SCG is executed based on the second activation command.

In an optional embodiment, the second sending unit 1210 may be a transceiver 1330. The network device 1200 may also include a processor 1310 and a memory 1320, as specifically shown in FIG. 13.

FIG. 13 is a schematic structural diagram of an apparatus for communication according to an embodiment of the present disclosure. The dashed line in FIG. 13 indicates that the unit or module is optional. The apparatus 1300 may be used to implement the method described in the method embodiments described above. The apparatus 1300 may be a chip, a terminal device, or a network device.

The apparatus 1300 may include one or more processors 1310. The processor 1310 may support the apparatus 1300 to implement the methods described in the above method embodiments. The processor 1310 may be a general-purpose processor or a special-purpose processor. For example, the processor may be a central processing unit (CPU). Optionally, the processor may also be another general purpose processor, a digital signal processor (DSP), an application specific integrated circuit (ASIC), a field programmable gate array (FPGA) or other programmable logic device, a discrete gate or transistor logic device, a discrete hardware component, or the like. The general purpose processor may be a microprocessor or the processor may be any conventional processor or the like.

The apparatus 1300 may also include one or more memories 1320. The memory 1320 has stored a program that can be executed by the processor 1310 to cause the processor 1310 to perform the method described in the above method embodiments. The memory 1320 may be independent of the processor 1310 or may be integrated in the processor 1310.

The apparatus 1300 may also include a transceiver 1330. The processor 1310 may communicate with other devices or chips through the transceiver 1330. For example, the processor 1310 may send and receive data with other devices or chips through the transceiver 1330.

Embodiments of the present disclosure further provide a computer-readable storage medium for storing a program. The computer-readable storage medium can be applied to a terminal or a network device provided by an embodiment of the present disclosure, and the program causes a computer to execute a method executed by the terminal or the network device in each embodiment of the present disclosure.

Embodiments of the present disclosure also provide a computer program product. The computer program product includes a program. The computer program product can be applied to a terminal or a network device provided by an embodiment of the present disclosure, and the program causes a computer to execute a method executed by the terminal or the network device in each embodiment of the present disclosure.

Embodiments of the present disclosure also provide a computer program. The computer program can be applied to a terminal or a network device provided by an embodiment of the present disclosure, and the computer program causes a computer to execute a method executed by the terminal or the network device in each embodiment of the present disclosure.

It is to be understood that the terms "system" and "network" may be used interchangeably in this application. In addition, the terminology used in the present disclosure is for explanation of specific embodiments of the present disclosure only, and is not intended to limit the present disclosure. The terms "first," "second," "third," and "fourth," etc. in the specification and claims of the present disclosure and the accompanying drawings are used to distinguish different objects, and are not used to describe a specific order. Furthermore, the terms "including" and "having" and any variations thereof are intended to cover non-exclusive inclusions.

In the embodiments of the present disclosure, the "indication" mentioned may be a direct indication, an indirect indication, or an associated relationship. For example, A indicates B, which may mean that A directly indicates B, for example, B can be acquired by A; It can also be indicated that A indicates B indirectly, for example, A indicates C, and B can be obtained through C; It can also be indicated that there is an association relationship between A and B.

In the embodiments of the present disclosure, "B corresponding to A" means that B is associated with A, and B can be determined from A. However, it should also be understood that determining B from A does not mean that B is determined from A alone, and that B may also be determined from A and/or other information.

In the embodiments of the present disclosure, the term "correspondence" may indicate that there is a direct correspondence or indirect correspondence relationship between the two, may indicate that there is a correlation relationship between the two, or may indicate a relationship between indicating and being instructed, configuring and being configured, or the like.

In the embodiment of the present disclosure, "predefined" or "preconfigured" may be realized by storing corresponding codes, tables, or other methods that can be used to indicate relevant information in a device (including, for example, a terminal device and a network device) in advance, and the present disclosure does not limit the specific implementation method thereof. For example, predefined may refer to defined in the protocol.

In the embodiment of the present disclosure, the "protocol" may refer to a standard protocol in the communication field, and may include, for example, an LTE protocol, an NR protocol, and related protocols applied to future communication systems, and the present disclosure is not limited thereto.

The term "and/or" in the embodiment of the present disclosure is only an association relationship describing an association object, and indicates that there may be three kinds of relationships, for example, A and/or B, which may indicate that A exists alone, A and B exist simultaneously, and B exists alone. In addition, the character "/" in this article generally indicates that the related objects before and after are in an "or" relationship.

In the embodiments of the present disclosure, the "include/comprise" may refer to directly including or indirectly including. Optionally, the reference to "include/comprise" in the embodiments of the present disclosure may be replaced with "indicating" or "for determining". For example, A includes B, can be replaced with A to indicate B, or A is used to determine B.

In various embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present disclosure may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or sent from one computer-readable storage medium to another computer-readable storage medium, for example, the computer instructions may be sent from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer or a data storage device such as a server, a data center, or the like that incorporates one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of the present disclosure should be based on the scope of protection of the claims.

## Claims

1. A method for activating a secondary cell group (SCG), comprising:
performing, by a terminal device, beam failure detection (BFD) and/or radio link monitoring (RLM) on the SCG in a deactivated state;
wherein initiation of the BFD and/or RLM is determined based on predicted information of data traffic of the terminal device.

2. The method of claim 1, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by a network device, wherein the SCG activation threshold is used to determine whether to activate the SCG based on actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

3. The method of claim 2, wherein the predicted information is determined based on a first model, and the first model is used to determine the predicted information based on the first information.

4. The method of claim 3, wherein the first model is deployed on the terminal device; or the first model is deployed on the network device.

5. The method of any one of claims 1 to 4, wherein the predicted information comprises one or more of:
target data traffic of the terminal device within a first time window after a current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR)-related information of the terminal device within a first time window after the current time; and
scheduling request (SR)-related information of the terminal device within a first time window after the current time.

6. The method of any one of claims 1 to 5, wherein the initiation of the BFD and/or RLM being determined based on the predicted information comprises: the initiation of the BFD and/or RLM being determined based on second information, and the second information being determined based on the predicted information;
wherein the second information comprises one or more of:
whether to initiate the BFD and/or RLM;
an initiation time for the BFD and/or RLM; and
a third duration, wherein the third duration is used to indicate a duration from the initiation time of the BFD and/or RLM.

7. The method of claim 6, wherein performing, by the terminal device, the BFD and/or RLM on the SCG in the deactivated state comprises:
if the second information indicates initiating the BFD and/or RLM, initiating, by the terminal device, the BFD and/or RLM on the SCG in the deactivated state; or
if the second information indicates the initiation time, initiating, by the terminal device, the BFD and/or RLM on the SCG in the deactivated state at the initiation time; or
if the second information indicates the third duration, initiating, by the terminal device, the BFD and/or RLM on the SCG in the deactivated state after the third duration has elapsed.

8. The method of claim 6 or 7, wherein the second information is determined based on a second model, and the second model is used to determine the second information based on the predicted information.

9. The method of claim 8, wherein the second model is deployed on the terminal device; or the second model is deployed on the network device.

10. The method of claim 9, wherein the second model is deployed on the network device, and the method further comprises:
receiving, by the terminal device, first indication information sent by the network device, wherein the first indication information is used to instruct the terminal device to initiate the BFD and/or RLM.

11. The method of claim 10, wherein the first indication information comprises one or more of:
the second information;
an initiation command for instructing the terminal device to initiate the BFD and/or RLM; and
a first timer for determining an initiation time for the BFD and/or RLM.

12. The method of any one of claims 9 to 11, wherein the second model is deployed on the network device, and the method further comprises:
sending, by the terminal device, second indication information to the network device;
wherein the second indication information is used to indicate one or more of:
information related to the terminal device required by the second model;
whether the terminal device sends the information related to the terminal device; and
whether the initiation of the BFD and/or RLM is determined based on the predicted information.

13. The method of claim 12, wherein sending, by the terminal device, second indication information to the network device comprises:
in response to the terminal device receiving a first request sent by the network device, sending, by the terminal device, the second indication information to the network device.

14. The method of claim 9, wherein the second model is deployed on the terminal device, and the method further comprises:
receiving, by the terminal device, third indication information sent by the network device;
wherein the third indication information is used to indicate one or more of:
information related to the network device required by the second model;
whether the network device sends the information related to the network device; and
whether the initiation of the BFD and/or RLM is determined based on the predicted information.

15. The method of claim 14, further comprising:
sending, by the terminal device, a second request;
wherein the second request is used to request the network device to send the third indication information.

16. A method for activating a secondary cell group (SCG), comprising:
sending, by a network device, indication information to a terminal device;
wherein the indication information is related to the terminal device performing BFD and/or RLM on the SCG in a deactivated state, and the initiation of the BFD and/or RLM is determined based on predicted information of data traffic of the terminal device.

17. The method of claim 16, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by the network device, wherein the SCG activation threshold is used to determine whether to activate the SCG based on actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

18. The method of claim 17, wherein the predicted information is determined based on a first model, and the first model is used to determine the predicted information based on the first information.

19. The method of claim 18, wherein the first model is deployed on the terminal device; or the first model is deployed on the network device.

20. The method of any one of claims 16 to 19, wherein the predicted information comprises one or more of:
target data traffic of the terminal device within a first time window after the current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR)-related information of the terminal device within a first time window after the current time; and
scheduling request (SR)-related information of the terminal device within a first time window after the current time.

21. The method of any one of claims 16 to 20, wherein the initiation of the BFD and/or RLM being determined based on the predicted information comprising: the initiation of the BFD and/or RLM being determined based on second information, and the second information being determined based on the predicted information;
wherein the second information comprises one or more of:
whether to initiate the BFD and/or RLM;
an initiation time for the BFD and/or RLM; and
a third duration, wherein the third duration is used to indicate a duration from the initiation time of the BFD and/or RLM.

22. The method of claim 21, wherein the second information is determined based on a second model, and the second model is used to determine the second information based on the predicted information.

23. The method of claim 22, wherein the second model is deployed on the terminal device; or the second model is deployed on the network device.

24. The method of claim 23, wherein the second model is deployed on the network device, and the indication information comprises first indication information, wherein the first indication information is used to indicate the terminal device to initiate the BFD and/or RLM.

25. The method of claim 24, wherein the first indication information comprises one or more of:
the second information;
an initiation command for instructing the terminal device to initiate the BFD and/or RLM; and
a first timer for determining an initiation time for the BFD and/or RLM.

26. The method of any one of claims 23 to 25, wherein the second model is deployed on the network device, and the method further comprises:
receiving, by the network device, second indication information sent by the terminal device;
wherein the second indication information is used to indicate one or more of:
information related to the terminal device required by the second model;
whether the terminal device sends the information related to the terminal device; and
whether the initiation of the BFD and/or RLM is determined based on the predicted information.

27. The method of claim 26, wherein receiving, by the network device, second indication information sent by the terminal device comprises:
in response to the terminal device receiving a first request sent by the network device, receiving, by the network device, the second indication information sent by the terminal device.

28. The method of claim 23, wherein the second model is deployed on the terminal device, and the indication information comprises third indication information,
wherein the third indication information is used to indicate one or more of:
information related to the network device required by the second model;
whether the network device sends the information related to the network device; and
whether the initiation of the BFD and/or RLM is determined based on the predicted information.

29. The method of claim 28, further comprising:
receiving, by the network device, a second request sent by the terminal device;
wherein the second request is used to request the network device to send the third indication information.

30. A method for activating a secondary cell group (SCG), comprising:
receiving, by a terminal device, a first activation command, wherein the first activation command is used to activate the SCG before an actual data traffic of the terminal device reaches an SCG activation threshold.

31. The method of claim 30, wherein the first activation command is determined based on predicted information of data traffic of the terminal device.

32. The method of claim 31, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by a network device, wherein the SCG activation threshold is used to determine whether to activate the SCG based on actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

33. The method of claim 32, wherein the predicted information is determined based on a first model, and the first model is used to determine the predicted information based on the first information.

34. The method of claim 33, wherein the first model is deployed on the terminal device; or the first model is deployed on the network device.

35. The method of any one of claims 31 to 34, wherein the predicted information comprises one or more of:
target data traffic of the terminal device within a first time window after the current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR) information of the terminal device within a first time window after the current time; and
scheduling request (SR)-related information of the terminal device within a first time window after the current time.

36. The method of any one of claims 31 to 35, wherein the first activation command being determined based on the predicted information of the data traffic of the terminal device comprising: the first activation command being determined based on third information, and the third information being determined based on the predicted information;
wherein the third information comprises one or more of:
whether to send the first activation command;
a sending time of the first activation command; and
a fourth duration, used to indicate a duration from the sending time.

37. The method of claim 36, wherein if the third information indicates the sending time or the fourth duration, the method further comprises:
receiving, by the terminal device, a second timer sent by the network device, wherein the second timer is used to determine an execution time of the first activation command.

38. The method of any one of claims 35 to 37, wherein the third information is determined based on a third model, and the third model is used to determine the third information based on the predicted information.

39. The method of claim 38, wherein the third model is deployed on the terminal device; or the third model is deployed on the network device.

40. The method of claim 39, wherein if the third model is deployed on the terminal device, the method further comprises:
sending, by the terminal device, the third information to the network device.

41. The method of any one of claims 30 to 40, wherein the first activation command is a media access control control element (MAC CE) command.

42. The method of any one of claims 30 to 41, further comprising:
receiving, by the terminal device, a second activation command sent by the network device, wherein the second activation command is used to activate the SCG when an actual data traffic of the terminal device reaches an SCG activation threshold;
activating, by the terminal device, the SCG based on the second activation command, if activation of the SCG based on the first activation command fails.

43. A method for activating a secondary cell group (SCG), comprising:
sending, by a network device, a first activation command to a terminal device, wherein the first activation command is used to activate the SCG before an actual data traffic of the terminal device reaches an SCG activation threshold.

44. The method of claim 43, wherein the first activation command is determined based on predicted information of data traffic of the terminal device.

45. The method of claim 44, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by the network device, wherein the SCG activation threshold is used to determine whether to activate the SCG based on the actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

46. The method of claim 45, wherein the predicted information is determined based on a first model, and the first model is used to determine the predicted information based on the first information.

47. The method of claim 46, wherein the first model is deployed on the terminal device; or the first model is deployed on the network device.

48. The method of any one of claims 44 to 47, wherein the predicted information comprises one or more of:
target data traffic of the terminal device within a first time window after a current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR)-related information of the terminal device within a first time window after the current time; and
scheduling request (SR)-related information of the terminal device within a first time window after the current time.

49. The method of any one of claims 44 to 48, wherein the first activation command being determined based on the predicted information of the data traffic of the terminal device comprising: the first activation command being determined based on third information, and the third information being determined based on the predicted information;
wherein the third information comprises one or more of:
whether to send the first activation command;
a sending time of the first activation command; and
a fourth duration, used to indicate a duration from the sending time.

50. The method of claim 49, wherein if the third information indicates the sending time or the fourth duration, the method further comprises:
sending, by the network device, a second timer to the terminal device, wherein the second timer is used to determine an execution time of the first activation command.

51. The method of claim 49, wherein if the third information indicates the sending time or the third duration, sending, by the network device, a first activation command to the terminal device comprises:
sending, by the network device, the first activation command at the sending time.

52. The method of any one of claims 48 to 51, wherein the third information is determined based on a third model, and the third model is used to determine the third information based on the predicted information.

53. The method of claim 52, wherein the third model is deployed on the terminal device; or the third model is deployed on the network device.

54. The method of claim 53, wherein if the third model is deployed on the terminal device, the method further comprises:
receiving, by the network device, the third information sent by the terminal device.

55. The method of any one of claims 43 to 54, wherein the first activation command is a media access control control element (MAC CE) command.

56. The method of any one of claims 43 to 55, wherein the method further comprises:
sending, by the network device, a second activation command to the terminal device;
wherein the second activation command is used to activate the SCG when the actual data traffic of the terminal device reaches the SCG activation threshold, and if activation of the SCG based on the first activation command fails, the activation of the SCG is performed based on the second activation command.

57. A terminal device, comprising:
a detection unit, configured to perform beam failure detection (BFD) and/or radio link monitoring (RLM) on a secondary cell group (SCG) in a deactivated state;
wherein initiation of the BFD and/or RLM is determined based on predicted information of data traffic of the terminal device.

58. The terminal device of claim 57, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by a network device, wherein the SCG activation threshold is used to determine whether to activate the SCG based on actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

59. The terminal device of claim 58, wherein the predicted information is determined based on a first model, and the first model is used to determine the predicted information based on the first information.

60. The terminal device of claim 59, wherein the first model is deployed on the terminal device; or the first model is deployed on the network device.

61. The terminal device of any one of claims 57 to 60, wherein the predicted information comprises one or more of:
target data traffic of the terminal device within a first time window after a current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR)-related information of the terminal device within a first time window after the current time; and
scheduling request (SR)-related information of the terminal device within a first time window after the current time.

62. The terminal device of any one of claims 57 to 61, wherein the initiation of the BFD and/or RLM being determined based on the predicted information comprises: the initiation of the BFD and/or RLM being determined based on second information, and the second information being determined based on the predicted information;
wherein the second information comprises one or more of:
whether to initiate the BFD and/or RLM;
an initiation time for the BFD and/or RLM; and
a third duration, wherein the third duration is used to indicate a duration from the initiation time of the BFD and/or RLM.

63. The terminal device of claim 62, wherein the detection unit is configured to:
if the second information indicates initiating the BFD and/or RLM, initiate the BFD and/or RLM on the SCG in the deactivated state; or
if the second information indicates the initiation time, initiate the BFD and/or RLM on the SCG in the deactivated state at the initiation time; or
if the second information indicates the third duration, initiate the BFD and/or RLM on the SCG in the deactivated state after the third duration has elapsed.

64. The terminal device of claim 62 or 63, wherein the second information is determined based on a second model, and the second model is used to determine the second information based on the predicted information.

65. The terminal device of claim 64, wherein the second model is deployed on the terminal device; or the second model is deployed on the network device.

66. The terminal device of claim 65, wherein the second model is deployed on the network device, and the terminal device is configured to:
receive first indication information sent by the network device, wherein the first indication information is used to instruct the terminal device to initiate the BFD and/or RLM.

67. The terminal device of claim 66, wherein the first indication information comprises one or more of:
the second information;
an initiation command for instructing the terminal device to initiate the BFD and/or RLM; and
a first timer for determining an initiation time for the BFD and/or RLM.

68. The terminal device of any one of claims 65 to 67, wherein the terminal device is further configured to:
send second indication information to the network device;
wherein the second indication information is used to indicate one or more of:
information related to the terminal device required by the second model;
whether the terminal device sends the information related to the terminal device; and
whether the initiation of the BFD and/or RLM is determined based on the predicted information.

69. The terminal device of claim 68, wherein sending second indication information to the network device comprises:
in response to the terminal device receiving a first request sent by the network device, sending the second indication information to the network device.

70. The terminal device of claim 65, wherein the terminal device is further configured to:
receive third indication information sent by the network device;
wherein the third indication information is used to indicate one or more of:
information related to the network device required by the second model;
whether the network device sends the information related to the network device; and
whether the initiation of the BFD and/or RLM is determined based on the predicted information.

71. The terminal device of claim 70, wherein the terminal device is further configured to:
send a second request;
wherein the second request is used to request the network device to send the third indication information.

72. A network device, comprising:
a first sending unit, configured to send indication information to a terminal device;
wherein the indication information is related to the terminal device performing BFD and/or RLM on a secondary cell group (SCG) in a deactivated state, and the initiation of the BFD and/or RLM is determined based on predicted information of data traffic of the terminal device.

73. The network device of claim 72, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by the network device, wherein the SCG activation threshold is used to determine whether to activate the SCG based on actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

74. The network device of claim 73, wherein the predicted information is determined based on a first model, and the first model is used to determine the predicted information based on the first information.

75. The network device of claim 74, wherein the first model is deployed on the terminal device; or the first model is deployed on the network device.

76. The network device of any one of claims 72 to 75, wherein the predicted information comprises one or more of:
target data traffic of the terminal device within a first time window after the current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR)-related information of the terminal device within a first time window after the current time; and
scheduling request (SR)-related information of the terminal device within a first time window after the current time.

77. The network device of any one of claims 72 to 76, wherein the initiation of the BFD and/or RLM being determined based on the predicted information comprising: the initiation of the BFD and/or RLM being determined based on second information, and the second information being determined based on the predicted information;
wherein the second information comprises one or more of:
whether to initiate the BFD and/or RLM;
an initiation time for the BFD and/or RLM; and
a third duration, wherein the third duration is used to indicate a duration from the initiation time of the BFD and/or RLM.

78. The network device of claim 77, wherein the second information is determined based on a second model, and the second model is used to determine the second information based on the predicted information.

79. The network device of claim 78, wherein the second model is deployed on the terminal device; or the second model is deployed on the network device.

80. The network device of claim 79, wherein the second model is deployed on the network device, and the indication information comprises first indication information, wherein the first indication information is used to indicate the terminal device to initiate the BFD and/or RLM.

81. The network device of claim 80, wherein the first indication information comprises one or more of:
the second information;
an initiation command for instructing the terminal device to initiate the BFD and/or RLM; and
a first timer for determining an initiation time for the BFD and/or RLM.

82. The network device of any one of claims 79 to 81, wherein the second model is deployed on the network device, and the network device is further configured to:
receiving, by the network device, second indication information sent by the terminal device;
wherein the second indication information is used to indicate one or more of:
information related to the terminal device required by the second model;
whether the terminal device sends the information related to the terminal device; and
whether the initiation of the BFD and/or RLM is determined based on the predicted information.

83. The network device of claim 82, wherein receiving second indication information sent by the terminal device comprises:
in response to the terminal device receiving a first request sent by the network device, receiving the second indication information sent by the terminal device.

84. The network device of claim 79, wherein the second model is deployed on the terminal device, and the indication information comprises third indication information,
wherein the third indication information is used to indicate one or more of:
information related to the network device required by the second model;
whether the network device sends the information related to the terminal device; and
whether the initiation of the BFD and/or RLM is determined based on the predicted information.

85. The network device of claim 84, wherein the network device is further configured to:
receive a second request sent by the terminal device;
wherein the second request is used to request the network device to send the third indication information.

86. A terminal device, comprising:
a receiving unit configured to receive a first activation command, wherein the first activation command is used to activate a secondary cell group (SCG) for the terminal device before an actual data traffic of the terminal device reaches an SCG activation threshold.

87. The terminal device of claim 86, wherein the first activation command is determined based on predicted information of data traffic of the terminal device.

88. The terminal device of claim 87, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by a network device, wherein the SCG activation threshold is used to determine whether to activate the SCG based on actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

89. The terminal device of claim 88, wherein the predicted information is determined based on a first model, and the first model is used to determine the predicted information based on the first information.

90. The terminal device of claim 89, wherein the first model is deployed on the terminal device; or the first model is deployed on the network device.

91. The terminal device of any one of claims 87 to 90, wherein the predicted information comprises one or more of:
target data traffic of the terminal device within a first time window after the current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR) information of the terminal device within a first time window after the current time; and
scheduling request (SR)-related information of the terminal device within a first time window after the current time.

92. The terminal device of any one of claims 87 to 91, wherein the first activation command being determined based on the predicted information of the data traffic of the terminal device comprising: the first activation command being determined based on third information, and the third information being determined based on the predicted information;
wherein the third information comprises one or more of:
whether to send the first activation command;
a sending time of the first activation command; and
a fourth duration, used to indicate a duration from the sending time.

93. The terminal device of claim 92, wherein if the third information indicates the sending time or the fourth duration, the terminal device is further configured to:
receive a second timer sent by the network device, wherein the second timer is used to determine an execution time of the first activation command.

94. The terminal device of any one of claims 91 to 93, wherein the third information is determined based on a third model, and the third model is used to determine the third information based on the predicted information.

95. The terminal device of claim 94, wherein the third model is deployed on the terminal device; or the third model is deployed on the network device.

96. The terminal device of claim 95, wherein if the third model is deployed on the terminal device, the terminal device is further configured to:
send the third information to the network device.

97. The terminal device of any one of claims 86 to 96, wherein the first activation command is a media access control control element (MAC CE) command.

98. The terminal device of any one of claims 86 to 97, wherein the terminal device is further configured to:
receive a second activation command sent by the network device, wherein the second activation command is used to activate the SCG when an actual data traffic of the terminal device reaches an SCG activation threshold;
activate the SCG based on the second activation command, if activation of the SCG based on the first activation command fails.

99. A network device, comprising:
a second sending unit configured to send a first activation command to a terminal device, wherein the first activation command is used to activate a secondary cell group (SCG) for the terminal device before an actual data traffic of the terminal device reaches an SCG activation threshold.

100. The network device of claim 99, wherein the first activation command is determined based on predicted information of data traffic of the terminal device.

101. The network device of claim 100, wherein the predicted information is determined based on first information, and the first information comprises one or more of:
position information of the terminal device;
data arrival information of the terminal device;
current time;
serving cell information of the terminal device;
neighboring cell information of the terminal device;
carrier frequency information of the terminal device;
buffer status report (BSR)-related information of the terminal device;
scheduling request (SR)-related information of the terminal device;
an SCG activation threshold configured by the network device, wherein the SCG activation threshold is used to determine whether to activate the SCG based on the actual data traffic;
a first threshold configured by the network device, wherein the first threshold is used to determine whether to activate the SCG based on predicted data traffic; and
a first duration, wherein the first duration is used to indicate to activate the SCG when a duration during which the predicted data traffic is greater than or equal to the first threshold reaches the first duration.

102. The network device of claim 101, wherein the predicted information is determined based on a first model, and the first model is used to determine the predicted information based on the first information.

103. The network device of claim 102, wherein the first model is deployed on the terminal device; or the first model is deployed on the network device.

104. The network device of any one of claims 100 to 103, wherein the predicted information comprises one or more of:
target data traffic of the terminal device within a first time window after a current time;
whether the target data traffic reaches a first threshold, wherein the first threshold is used to determine whether to activate the SCG based on predicted data traffic;
whether a duration during which the target data traffic reaches the first threshold reaches a first duration;
whether the target data traffic reaches an SCG activation threshold, wherein the SCG activation threshold is used to determine whether to activate the SCG based on actual data traffic;
whether a duration during which the target data traffic reaches the SCG activation threshold reaches a second duration;
a probability that the target data traffic reaches the first threshold;
a probability that a duration during which the target data traffic reaches the first threshold reaches the first duration;
a probability that the target data traffic reaches the SCG activation threshold;
a probability that a duration during which the target data traffic reaches the SCG activation threshold reaches the second duration;
a first target time at which the target data traffic reaches the first threshold;
a second target time at which a duration during which the target data traffic reaches the first threshold reaches the first duration;
a third target time at which the target data traffic reaches the SCG activation threshold;
a fourth target time at which a duration during which the target data traffic reaches the SCG activation threshold reaches the second duration;
a duration from the current time of the terminal device to the first target time;
a duration from the current time of the terminal device to the second target time;
a duration from the current time of the terminal device to the third target time;
a duration from the current time of the terminal device to the fourth target time;
buffer status report (BSR)-related information of the terminal device within a first time window after the current time; and
scheduling request (SR)-related information of the terminal device within a first time window after the current time.

105. The network device of any one of claims 100 to 104, wherein the first activation command being determined based on the predicted information of the data traffic of the terminal device comprising: the first activation command being determined based on third information, and the third information being determined based on the predicted information;
wherein the third information comprises one or more of:
whether to send the first activation command;
a sending time of the first activation command; and
a fourth duration, used to indicate a duration from the sending time.

106. The network device of claim 105, wherein if the third information indicates the sending time or the fourth duration, the network device is further configured to:
send a second timer to the terminal device, wherein the second timer is used to determine an execution time of the first activation command.

107. The network device of claim 105, wherein if the third information indicates the sending time or the third duration, sending, by the network device, a first activation command to the terminal device comprises:
sending, by the network device, the first activation command at the sending time.

108. The network device of any one of claims 104 to 107, wherein the third information is determined based on a third model, and the third model is used to determine the third information based on the predicted information.

109. The network device of claim 108, wherein the third model is deployed on the terminal device; or the third model is deployed on the network device.

110. The network device of claim 109, wherein if the third model is deployed on the terminal device, the network device is further configured to:
receive the third information sent by the terminal device.

111. The network device of any one of claims 99 to 110, wherein the first activation command is a media access control control element (MAC CE) command.

112. The network device of any one of claims 99 to 111, wherein the network device is further configured to:
send a second activation command to the terminal device;
wherein the second activation command is used to activate the SCG when the actual data traffic of the terminal device reaches the SCG activation threshold, and if activation of the SCG based on the first activation command fails, the activation of the SCG is performed based on the second activation command.

113. A terminal device, comprising a memory and a processor, wherein the memory is configured to store a program, and the processor is configured to invoke the program from the memory to cause the terminal device to perform the method of any one of claims 1 to 15 and 30 to 42.

114. A network device, comprising a memory and a processor, wherein the memory is configured to store a program, and the processor is configured to invoke the program from the memory to cause the network device to perform the method of any one of claims 16 to 29 and 43 to 56.

115. An apparatus, comprising a processor, configured to invoke a program from a memory to cause the apparatus to perform the method of any one of claims 1 to 56.

116. A chip, comprising a processor, configured to invoke a program from a memory to cause a device equipped with the chip to perform the method of any one of claims 1 to 56.

117. A computer-readable storage medium having stored thereon a program for causing a computer to perform the method of any one of claims 1 to 56.

118. A computer program product, comprising a program, wherein the program causes a computer to perform the method of any one of claims 1 to 56.

119. A computer program for causing a computer to perform the method of any one of claims 1 to 56.
